(19) Europäisches Patentamt

European Patent Office

Office européen des brevets

(11) **EP 1 470 448 B1**

(12) **EUROPÄISCHE PATENTSCHRIFT**

(45) Veröffentlichungstag und Bekanntmachung des Hinweises auf die Patenterteilung:
**28.06.2006  Patentblatt 2006/26**

(21) Anmeldenummer: 03734700.2

(22) Anmeldetag: **28.01.2003**

(51) Int Cl.:
*G03F 7/022* (2006.01)      *C08F 257/02* (2006.01)
*C08F 283/10* (2006.01)     *G03F 7/004* (2006.01)
*G03F 7/032* (2006.01)      *H05K 3/28* (2006.01)
*G03F 7/027* (2006.01)      *G03F 7/033* (2006.01)
*C08F 290/04* (2006.01)     *G03F 7/016* (2006.01)
*G03F 7/023* (2006.01)      *G03C 1/93* (2006.01)
*G03F 7/11* (2006.01)

(86) Internationale Anmeldenummer:
**PCT/EP2003/000822**

(87) Internationale Veröffentlichungsnummer:
**WO 2003/065121 (07.08.2003 Gazette 2003/32)**

(54) **THERMISCH UND MIT AKTINISCHER STRAHLUNG HÄRTBARES STOFFGEMISCH, VERFAHREN ZU SEINER HERSTELLUNG UND SEINE VERWENDUNG**

MIXTURE OF SUBSTANCES WHICH CAN BE HARDENED BY HEAT AND BY ACTINIC RADIATION, METHOD FOR THE PRODUCTION AND USE THEREOF

MELANGE DE MATIERES DURCISSABLE PAR LA CHALEUR ET PAR RAYONNEMENT ACTINIQUE, ET PROCEDE DE PRODUCTION ET D'UTILISATION DUDIT MELANGE

(84) Benannte Vertragsstaaten:
**AT BE BG CH CY CZ DE DK EE ES FI FR GB GR HU IE IT LI LU MC NL PT SE SI SK TR**

(30) Priorität: **01.02.2002  DE 10204114**

(43) Veröffentlichungstag der Anmeldung:
**27.10.2004  Patentblatt 2004/44**

(73) Patentinhaber: **BASF Coatings AG**
**48165 Münster (DE)**

(72) Erfinder:
• **BAUMGART, Hubert**
**48163 Münster (DE)**
• **HEID, Ingrid**
**48149 Münster (DE)**
• **RÖCKRATH, Ulrike**
**48308 Senden (DE)**
• **ZUMBRINK, Andrea**
**48734 Reken (DE)**

(74) Vertreter: **Fitzner, Uwe et al**
**Dres. Fitzner & Münch**
**Hauser Ring 10**
**40878 Ratingen (DE)**

(56) Entgegenhaltungen:
EP-A- 0 933 681          WO-A-92/15628
US-A- 4 459 348          US-A- 4 699 867
US-A- 4 828 959          US-A- 5 153 101
US-A- 5 264 324          US-B1- 6 323 287

**Beschreibung**

**Gebiet der Erfindung**

Die vorliegende Erfindung betrifft eine neues, thermisch und mit aktinischer Strahlung härtbares Stoffgemisch. Außerdem betrifft die vorliegende Erfindung ein neues Verfahren zur Herstellung von thermisch und mit aktinischer Strahlung härtbaren Stoffgemischen. Des weiteren betrifft die vorliegende Erfindung die Verwendung des neuen, thermisch und mit aktinischer Strahlung härtbaren Stoffgemischs und der nach dem neuen Verfahren hergestellten thermisch und mit aktinischer Strahlung härtbaren Stoffgemische für die Herstellung von gehärteten, vorzugsweise duroplastischen, Materialien, insbesondere von Formteilen und Folien und als Beschichtungsstoffe, Klebstoffe und Dichtungsmassen zur Herstellung von Beschichtungen, Klebschichten und Dichtungen.

Im Rahmen der vorliegenden Erfindung werden unter duroplastischen Materialien dreidimensional vernetzte Stoffe verstanden, die im Gegensatz zu thermoplastischen Materialien nur in einem sehr geringen Umfang oder gar nicht mehr in der Hitze verformbar sind.

Hier und im folgenden ist unter aktinischer Strahlung elektromagnetische Strahlung, wie sichtbares Licht, UV-Strahlung oder Röntgenstrahlung, insbesondere UV-Strahlung, oder Korpuskularstrahlung, wie Elektronenstrahlung, zu verstehen.

Die Härtung mit Hitze und mit aktinischer Strahlung wird von der Fachwelt auch als Dual-Cure bezeichnet.

**Stand der Technik**

Aus der internationalen Patentanmeldung WO 98/40170 ist ein Dual-Cure-Klarlack für ein Nass-in-nass-Verfahren bekannt, bei dem man eine Schicht aus einem Basislack mit einem Klarlack überschichtet, wonach man die resultierende Klarlackschicht vor dem gemeinsamen Einbrennen mit aktinischer Strahlung bestrahlt. Der Klarlack enthält, bezogen auf seinen Festkörper, 50 bis 98 Gew.-% aus einem thermisch durch Additions- und/oder Kondensationsreaktionen härtbaren System A), das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und 2 bis 50 Gew.-% aus einem unter Einwirkung von aktinischer Strahlung durch radikalische Polymerisation olefinischer Doppelbindungen härtbaren System B).

Vorzugsweise enthält das System A) ein hydroxyfunktionelles Acrylatbindemittel einer Hydroxylzahl von 30 bis 300, bevorzugt 50 bis 250 mg KOH/g und einer zahlenmittleren Molmasse von 1.000 bis 10.000 Dalton. Es kann aromatische Struktureinheiten, beispielsweise in Form einpolymerisierten Styrols enthalten. Die Glasübergangstemperatur des hydroxyfunktionellen Acrylatbindemittels ist nicht näher spezifiziert. Nähere Angaben zur Zusammensetzung werden auch nicht in den Beispielen gemacht.

Das durch radikalische Polymerisation olefinischer Doppelbindungen härtbare System B) kann ein hexafunktionelles, aliphatisches Urethanacrylat eines theoretischen Molgewichts von 1.000 enthalten.

Der bekannte Dual-Cure-Klarlack soll an senkrechten Flächen nicht mehr ablaufen und Klarlackierungen liefern, die einen hervorragenden optischästhetischen Eindruck und eine reduzierte Anfälligkeit gegen Chemikalien und Verkratzungen, insbesondere gegen Säuren und Waschverkratzungen, haben.

Aus der europäischen Patentanmeldung EP 0 928 800 A 1 sind Dual-Cure-Klarlacke bekannt, die Isocyanatoacrylate und hydroxyfunktionelle Copolymere enthalten, die im wesentlichen aus (Meth)Acrylaten, Hydroxyalkyl(meth)acrylaten und gegebenenfalls Styrol und/oder anderen Monomeren, wie z. B. Acrylnitril, hergestellt werden. Insbesondere wird ein hydroxylgruppenhaltiges Polyacrylat mit einpolymerisiertem Styrol und mit ungefähr 3 Gew.% Hydroxylgrupppen verwendet, das von der Firma Bayer AG unter der Marke Desmophen® A VP LS 2001/1 vertrieben wird.

Die mit Hilfe der Dual-Cure-Klarlacke der internationalen Patentanmeldung WO 98/40170 und der europäischen Patentanmeldung EP 0 928 800 A 1 hergestellten Klarlackierungen müssen aber in ihrer Überbrennstabilität und Oberflächenhärte weiter verbessert werden.

Aus der internationalen Patentanmeldung WO 00/68223 sind Dual-Cure-Beschichtungsstoffe bekannt, die mindestens einen mit aktinischer Strahlung härtbaren, (meth)acrylatfunktionellen Bestandteil (a 1), der vorzugsweise aromatenfrei ist, enthalten. Außerdem enthalten die bekannten Dual-Cure-Beschichtungsstoffe mindestens einen (meth)acrylatfunktionellen Bestandteil (a 2), der dem Bestandteil (a 1) entspricht, nur dass er noch zwingend mindestens eine reaktive funktionelle Gruppe für die thermische Vernetzung enthält. Darüber hinaus können die bekannten Dual-Cure-Beschichtungsstoffe mindestens einen thermisch härtbaren Bestandteil (a 7) enthalten, der ebenfalls vorzugsweise aromatenfrei ist. Die übrigen Bestandteilen der bekannten Dual-Cure-Beschichtungsstoffe können dagegen aromatische Gruppen enthalten.

Die bekannte Dual-Cure-Beschichtungsstoffe ergeben Versiegelungen für SMC (Sheet Moulded Compounds) und BMC (Bulk Moulded Compounds), die die Bildung von Mikrobläschen (microbubbling, blistering) ohne großen Aufwand wirksam unterdrücken, eine glatte, von Oberflächenstrukturen wie Orangenhaut freie Oberfläche aufweisen, welche keine Nachbehandlung erfordert, und leicht und sicher überlackiert werden kann, ohne daß sich danach Probleme der Zwischenschichthaftung ergeben. Ihre thermische Stabilität ist hoch: selbst bei zweistündiger thermischer Belastung bei 190 °C wird die Oberfläche nicht geschädigt. Darüber, ob dabei eine Vergilbung eintritt oder ob die Versiegelungen witterungsstabil, kratzfest oder chemikalienfest sind, wird nichts ausgesagt. Diese Eigenschaften sind auch für die Versiegelungen ohne Belang, da sie bei ihrer zweckgemäßen Verwendung ohnehin überlackiert werden.

Aus den Dokumenten US 6,323,287 B1, EP 0 933 681, US 5,264,324, US 5,153,101, WO 92/15628, US 4,828,959, US 4,699,867, US 4,459,348 sind Zusammensetzungen enthaltend Bindemittel und Vernetzungsmittel bekannt. Diese Dokumente betreffen jedoch keine Automobillacke bzw. Automobillackierungen, sondern elektronische Bauteile.

## Aufgabe

Kommt es bei der Erstlackierung von Kraftfahrzeugen, insbesondere von PKW, aufgrund von Störungen zu einem Stillstand der Linie, werden die Lackschichten auf den Karosserien, die sich gerade in einer Anlage zur thermischen Härtung, beispielsweise einem Umluftofen, befinden, zu lange der Hitze ausgesetzt und dadurch überbrannt. Eine Überbrennung kann auch durch eine fehlerhafte Regelung der Anlage zur thermischen Härtung hervorgerufen werden, beispielsweise wenn die Temperatur im Umluftofen zu hoch ist. Dadurch werden insbesondere die Klarlackschichten oder die Klarlackierungen am ehesten geschädigt. Denn bei den Klarlackierungen handelt es sich üblicherweise um die äußerste Schicht von hochwertigen farb- und/oder effektgebenden Mehrschichtlackierungen, die wesentlich den optischen Gesamteindruck (Appearance) bestimmt und die farb- und/oder effektgebenden Schichten vor mechanischer und chemischer Schädigung und Schädigung durch Strahlung schützt. Deswegen machen sich auch Defizite in der Härte, Kratzfestigkeit, Chemikalienbeständigkeit, Witterungsstabilität und der Stabilität gegenüber Vergilbung bei der Klarlackierung besonders stark bemerkbar.

Die aus den bekannten Dual-Cure-Klarlacken hergestellten Klarlackierungen können aber bei einer Überbrennung vergilben. Außerdem haben sie des öfteren eine nicht ausreichende Witterungsstabilität.

Aufgabe der vorliegenden Erfindung ist es, ein neues, thermisch und mit aktinischer Strahlung härtbares Stoffgemisch zu finden, das die Nachteile des Standes der Technik nicht mehr länger aufweist, sondern das sich in einfacher Weise herstellen und in vielfältiger Weise, insbesondere zur Herstellung von Formteilen und Folien und als Beschichtungsstoff, Klebstoff und Dichtungsmasse zur Herstellung von Beschichtungen, Klebschichten und Dichtungen, verwenden lässt und gehärtete, vorzugsweise duroplastische, Materialien, insbesondere Folien, Formteile, Beschichtungen, Klebschichten und Dichtungen liefert, die die Vorteile der aus den bekannten Dual-Cure-Beschichtungsstoffen oder -Klarlacken hergestellten duroplastische Materialien aufweisen, die aber beim Überbrennen nicht oder nur sehr wenig vergilben, eine bessere Witterungsstabilität, eine bessere Kratzfestigkeit, eine bessere Chemikalienstabilität und eine geringere reversible Gelbfärbung unmittelbar nach der Härtung mit aktinischer Strahlung aufweisen. Dabei wird die Überbrennstabilität beispielsweise einer Beschichtung bestimmt, indem man Prüftafein mit der zu prüfenden Beschichtung herstellt. Vorzugsweise ist die Beschichtung weiß. Ein Teil der Prüftafeln wird dabei unter üblichen Bedingungen gehärtet und bildet den Standard, gegen den verglichen wird. Die anderen Prüftafeln werden bei höheren Temperaturen gehärtet, die in der Praxis normalerweise vermieden werden und nur bei Betriebsstörungen auftreten. Anschließend werden die Gelbwerte nach DIN 6167 gemessen und mit dem Standard verglichen. Eine geringe Erhöhung der Gelbwerte in Abhängigkeit von der Erhöhung der Härtungstemperatur belegt dann die Überbrennstabilität.

## Lösung

Demgemäß wurde das neue thermisch und mit aktinischer Strahlung härtbare (Dual-Cure-)Stoffgemisch gefunden, enthaltend mindestens ein Bindemittel und mindestens ein Vernetzungsmittel, wobei

(1) der Festkörper des Stoffgemischs, der das aus dem Stoffgemisch herstellbare gehärtete, insbesondere duroplastische, Material aufbaut, max. 10 Gew.-% aromatische Struktureinheiten enthält und

(2) die Bestandteile des Festkörper des Stoffgemischs so ausgewählt sind, daß das aus dem Stoffgemisch herstellbare gehärtete, insbesondere duroplastische, Material eine Glasübergangstemperatur $Tg \geq 40$ °C, gemessen mit der Dynamisch-Mechanischen Thermo-Analyse (DMTA) an freien Filmen mit einer Schichtdicke von $40 \pm 10$ $\mu$m, aufweist, und wobei die Bindemittel ausgewählt werden aus der Gruppe bestehend aus acrylierten Polyacrylaten, acrylierten Polyurethanen, Urethanacrylaten, hydroxylgruppenhaltigen (Meth)Acrylatcopolymerisaten und Mischungen davon, und

die Vernetzungsmittel ausgewählt werden aus der Gruppe bestehend aus aliphatischen Polyisocyanaten, cycloaliphatischen Polyisocyanaten, Isocyanatoacrylaten und Mischungen davon.

Im folgenden wird das neue Dual-Cure-Stoffgemisch als »erfindungsgemäßes Stoffgemisch« bezeichnet.

Im Hinblick auf den Stand der Technik war es überraschend und für den Fachmann nicht vorhersehbar, daß die Aufgabe, die der vorliegenden

Erfindung zugrundelag, mit Hilfe des erfindungsgemäßen Stoffgemischs und des erfindungsgemäßen Verfahrens gelöst werden konnte.

Insbesondere war es überraschend, dass sich das erfindungsgemäße Stoffgemisch mit Hilfe des erfindungsgemäßen Verfahrens in einfacher Weise herstellen und in vielfältiger Weise, bevorzugt zur Herstellung von gehärteten, vorzugsweise duroplastischen, Materialien, insbesondere von Formteilen und Folien und als Beschichtungsstoff, Klebstoff und Dichtungsmasse zur Herstellung von Beschichtungen, Klebschichten und Dichtungen, verwenden ließ und gehärtete, vorzugsweise duroplastische, Materialien, insbesondere Folien, Formteile, Beschichtungen, Klebschichten und Dichtungen lieferte, die die Vorteile der aus den bekannten Beschichtungsstoffen oder -Klarlacken hergestellten gehärteten, insbesondere duroplastischen, Materialien aufwiesen, die aber beim Überbrennen nicht oder nur sehr wenig vergilbten und eine bessere Witterungsstabilität zeigten.

Außerdem war es überraschend, dass die gehärteten, insbesondere duroplastischen, Materialien eine hohe Chemikalienbeständigkeit und Kratzfestigkeit aufwiesen, obwohl dies bekanntermaßen gegenläufige Eigenschaften sind.

## Ausführliche Beschreibung der Erfindung

Das erfindungsgemäße Stoffgemisch enthält mindestens ein, insbesondere ein, Bindemittel und mindestens ein, insbesondere mindestens zwei, insbesondere mindestens zwei, Vemetzungsmittel. Beispiele geeigneter Bindemittel und Vernetzungsmittel werden nachstehend beschrieben.

Darüber hinaus kann das erfindungsgemäße Stoffgemisch mindestens einen Zusatzstoff enthalten. Beispiele geeigneter Zusatzstoffe werden nachstehend beschrieben.

Für das erfindungsgemäße Stoffgemisch ist es wesentlich, dass sein Festkörper, der das aus ihm herstellbare gehärtete, insbesondere duroplastische, Material aufbaut, max. 10, vorzugsweise max. 7, bevorzugt max. 5, besonders bevorzugt max. 2 und ganz besonders bevorzugt weniger als 1 Gew.% aromatische Strukturen enthält. Insbesondere liegt der Gehalt an aromatischen Strukturen unterhalb der Nachweisgrenzen von üblichen und bekannten Methoden zu ihrem qualitativen oder quantitativen Nachweis.

Aromatische Strukturen im Sinne der vorliegenden Erfindung leiten sich ab von ein- oder mehrkernigen aromatischen Verbindungen, d. h. cyclischen Verbindungen mit konjugierten Doppelbindungen, die ein delokalisiertes $\pi$-Elektronensystem aufbauen. Beispiele aromatischer Verbindungen sind Benzol, Biphenyl, Diphenylmethan, Naphthalin oder Phenanthren, insbesondere Benzol.

Diese erfindungswesentliche Bedingung wird vorzugsweise dadurch realisiert, dass das erfindungsgemäße Stoffgemisch im vorstehend genannten Sinne im wesentlichen oder völlig aromatenfreie Bindemittel und/oder Vernetzungsmittel, bevorzugt Bindemittel und Vernetzungsmittel, enthält. Besonders bevorzugt ist auch der Zusatzstoff oder mindestens einer der Zusatzstoffe im wesentlichen oder völlig aromatenfrei. Insbesondere sind alle Zusatzstoffe im wesentlichen oder völlig aromatenfrei.

»Im wesentlichen aromatenfrei« bedeutet, dass die Bestandteile noch Spuren aromatischer Struktureinheiten enthalten, die beispielsweise durch unvermeidliche Nebenreaktionen bei der Herstellung der Bestandteile und/oder durch nachträgliche Abbaureaktionen entstehen. »Völlig aromatenfrei« bedeutet, dass der Gehalt an aromatischen Struktureinheiten unterhalb der Nachweisgrenzen der üblichen und bekannten Nachweismethoden liegt.

Erfindungsgemäß sind die Bestandteile des Festkörpers so ausgewählt, dass das aus dem erfindungsgemäßen Stoffgemisch herstellbare gehärtete, insbesondere duroplastische, Material eine Glasübergangstemperatur Tg $\geq$ 40, vorzugsweise $\geq$ 50, bevorzugt $\geq$ 60 und insbesondere $\geq$ 70 °C hat.

In einer bevorzugten Ausführungsform sind die Bestandteile des Festkörpers so ausgewählt, dass das aus dem erfindungsgemäßen Stoffgemisch herstellbare gehärtete, insbesondere duroplastische, Material einen Speichermodul E' im gummielastischen Bereich von mindestens von mindestens $10^{7,5}$, vorzugsweise mindestens $10^{7,6}$, bevorzugt mindestens $10^{8,0}$ und insbesondere mindestens $10^{8,3}$ Pa hat.

In einer weiteren bevorzugten Ausführungsform sind die Bestandteile des in Festkörpers so ausgewählt, dass das aus dem erfindungsgemäße Stoffgemisch herstellbare gehärtete, insbesondere duroplastische, Material einen Verlustfaktor tan$\delta$ bei 20 °C von maximal 0,10, bevorzugt maximal 0,06, aufweist.

In der besonders bevorzugten Ausführungsform sind die Bestandteile des Festkörpers so ausgewählt, dass das aus dem erfindungsgemäßen Stoffgemisch herstellbare gehärtete, insbesondere duroplastische, Material hinsichtlich der Glasübergangstemperatur, des Speichermoduls E' und des Verlustfaktors tan$\delta$ die vorstehend genannten Bedingungen erfüllt.

Erfindungsgemäß werden die Glasübergangstemperatur, der Speichermodul E' und der Verlustfaktor tan$\delta$ mit der Dynamisch-Mechanischen Thermo-Analyse (DMTA) an freien Filmen des aus dem erfindungsgemäßen Stoffgemisch herstellbaren duroplastischen Materials gemessen. Dabei weisen die freien Filme eine Schichtdicken von $40 \pm 10\ \mu m$ auf.

Der bei einer Deformation eines viskoelastischen Materials wie z.B. eines Polymers wieder zurückzugewinnende Energieanteil (elastischer Anteil) wird durch die Größe des Speichermoduls E' bestimmt, während der bei diesem Vorgang aufgezehrte (dissipierte). Energieanteil durch die Größe des Verlustmoduls E" beschrieben wird. Die Module E' und E" sind von der Deformationsgeschwindigkeit und der Temperatur abhängig. Der Verlustfaktor tanδ ist definiert als der Quotient aus dem Verlustmodul E" und dem Speichermodul E'. tanδ lässt sich mit Hilfe der Dynamisch-Mechanischen-Thermo-Analyse (DMTA) bestimmen und stellt ein Maß für das Verhältnis zwischen den elastischen und plastischen Eigenschaften des Films dar. Die DMTA ist eine allgemein bekannte Meßmethode zur Bestimmung der viskoelastischen Eigenschaften von Beschichtungen und beispielsweise beschrieben in Murayama, T., Dynamic Mechanical Analysis of Polymeric Materials, Elsevier, New York, 1978 und Loren W. Hill, Joumal of Coatings Technology, Vol. 64, No. 808, May 1992, Seiten 31 bis 33. Die Verfahrensbedingungen bei der Messung von tanδ mit Hilfe der DMTA werden von Th. Frey, K.-H. Große Brinkhaus und U. Röckrath in Cure Monitoring Of Thermoset Coatings, Progress In Organic Coatings 27 (1996), 59-66, oder in der deutschen Patentanmeldung DE 44 09 715 A 1 oder dem deutschen Patent DE 197 09 467 C 2 im Detail beschrieben. Vorzugsweise werden die folgenden Bedingungen angewandt: Tensile mode; Amplitude: 0,2%; Frequenz: 1 Hz; Temperatur-Rampe: 1°C/min von Raumtemperatur bis 200°C.

Die erfindungswesentliche Glasübergangstemperatur Tg für das aus dem erfindungsgemäßen Stoffgemisch herstellbare gehärtete, insbesondere duroplastische, Material kann vom Fachmann über die Glasübergangstemperatur Tg der Bestandteile des erfindungsgemäßen Stoffgemischs und/oder über deren Funktionalität hinsichtlich der thermisch und/oder mit aktinischer Strahlung initiierten Vernetzungsreaktionen gesteuert werden. Die Glasübergangstemperatur der Bestandteile hat auch einen Einfluss auf den Speichermodul E' und den Verlustfaktor tanδ. Diese Wechselwirkung kann von Fachmann mit Hilfe einiger weniger empirischer Untersuchungen so beeinflusst werden, dass die Parameter in einfacher Weise eingestellt werden können.

Was die Funktionalität betrifft, gilt, dass je höher die Funktionalität der Bestandteile ist, desto höher ist die Vemetzungsdichte und desto kleiner ist die Netzbogenlänge in den duroplastischen Materialien. Je kleiner aber die Netzbogenlänge ist, desto höher ist die Glasübergangstemperatur Tg des betreffenden duroplastischen Materials. Somit kann die Glasübergangstemperatur durch die Verwendung von Bestandteilen mit hoher Funktionalität eingestellt werden.

Zur Einstellung der Glasübergangstemperatur Tg des aus dem erfindungsgemäßen Stoffgemisch herstellbaren gehärteten, insbesondere duroplastischen, Materials können aber auch Bestandteile eingesetzt werden, die für sich selbst gesehen bereits eine hohe Glasübergangstemperatur Tg haben. Wegen ihres hohen Anteils an dem erfindungsgemäßen Stoffgemisch bieten sich vor allem die Bindemittel und die Vernetzungsmittel zur Einstellung an.

Dabei enthalten Bindemittel und Vernetzungsmittel mit hoher Glasübergangstemperatur Tg vorzugsweise cycloaliphatische Struktureinheiten.

Zusätzlich zu oder an Stelle von diesen cycloaliphatischen Struktureinheiten können die Bindemittel und Vernetzungsmittel mit hoher Glasübergangstemperatur Tg olefinisch ungesättigte Monomere, ausgenommen aromatische Struktureinheiten enthaltende, einpolymerisiert enthalten, die, für sich selbst gesehen, Homopolymerisate einer Glasübergangstemperatur ≥ 50, vorzugsweise ≥ 60, bevorzugt ≥ 75 und insbesondere ≥ 120 °C aufbauen. Vorzugsweise enthalten die Bestandteile die Monomeren in einer Menge von 5 bis 90, bevorzugt 10 bis 70 und insbesondere 25 bis 50 Gew.-%, jeweils bezogen auf die Gesamtmenge des betreffenden Bestandteils. Die olefinisch ungesättigten Monomere können reaktive funktionelle Gruppen tragen, die mit Gruppen der eigenen Art, d. h. mit sich selbst, oder mit komplementären reaktiven funktionellen Gruppen thermische Vemetzungsreaktionen eingehen können. Vorzugsweise werden Hydroxylgruppen und als komplementäre Gruppen Isocyanatgruppen verwendet. Die olefinisch ungesättigten Monomere können aber auch frei von solchen reaktiven funktionellen Gruppen sein; sie werden dann als Neutralmonomere bezeichnet. Vorzugsweise werden die Neutralmonomeren eingesetzt. Bevorzugt werden sie aus der Gruppe, bestehend aus Cyclohexyl-, 4-tert.-Butylcyclohexyl- und Isobomyl(meth)acrylat, ausgewählt. Besonders bevorzugt werden die Methacrylate eingesetzt, ganz besonders bevorzugt Cyclohexylmethacrylat.

Beispiele geeigneter Bindemittel und Vernetzungsmittel sind die nachstehend beschriebenen.

Das vorstehend Gesagte gilt auch für die Zusatzstoffe, insbesondere die nachstehend beschriebenen Rheologiehilfsmittel.

Der Speichermodul E' kann vom Fachmann durch die Auswahl bestimmter mit aktinischer Strahlung härtbarer und/oder thermisch härtbarer Bestandteile, der Funktionalität der Bestandteile und ihres Anteils am erfindungsgemäß zu verwendenden Dual-Cure-Stoffgemisch eingestellt werden.

Der Speichermodul E' kann mit Hilfe von mit aktinischer Strahlung härtbaren Bestandteilen in der Regel dadurch eingestellt werden, indem Art und Menge der Bestandteile vorzugsweise so gewählt werden, dass pro g Festkörper des erfindungsgemäßen Stoffgemischs 0,5 bis 6,0, bevorzugt 1,0 bis 4,0 und besonders bevorzugt 2,0 bis 3,0 mEqu an mit aktinischer Strahlung aktivierbaren Bindungen vorliegen.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vemetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzeibindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Besonders bevorzugte Doppelbindungen enthaltende Verbindungen sind Acrylatgruppen enthaltende Verbindungen.

Dabei kann es sich um niedermolekulare Verbindungen handeln, die von der Fachwelt auch als Reaktivverdünner bezeichnet werden (vgl. Römpp Lexikon Lacke und Druckfarben, Georg Thieme Verlag, Stuttgart, New York, 1998, »Reaktivverdünner«, Seiten 491 und 492).

Des weiteren kommen Dimere und Oligomere in Betracht, die vorzugsweise Ester- und/oder Urethangruppen sowie gegebenenfalls freie Isocyanatgruppen enthalten.

Nicht zuletzt können Acrylatgruppen enthaltende Polymere, wie acrylierte (Meth)Acrylat(co)polymerisate, Polyolefine, Polyester, Polyether, Polyurethane, Polyester-polyurethane, Polyether-polyurethane, Polyetherpolyester-polyurethane, Polyamide, Polyamine, Formaldehydharze, insbesondere Melamin-Formaldehydharze, Polyepoxide, Polyharnstoffe oder Polysiloxane, verwendet werden. Die acrylierten Polymere können durch den Einbau flexibilisierender Segmente flexibilisiert werden (vgl. auch das deutschen Patent DE 197 09 467 C 1). Beispiele geeigneter flexibilisierender Segmente sind die nachstehend beschriebenen.

Besonders bevorzugte Reaktiverdünner sind Pentaerythrittetraacrylat oder Dipentaerythritpentaacrylat.

Besonders bevorzugte acrylierte Oligomere und Polymere sind acrylierte Polyacrylate, die beispielsweise durch die polymeranaloge Umsetzung von glycidylgruppenhaltigen Polyacrylaten mit Acrylsäure erhältlich sind (vgl. die europäische Patentanmeldung EP 0 659 979 A 1), sowie acrylierte Polyurethane oder Urethanacrylate, insbesondere von aromatischen Gruppen freie, aliphatische und/oder cycloaliphatische Urethanacrylate, wie sie beispielsweise aus dem deutschen Patent DE 197 09 467 C 1, Seite 5, Zeilen 16 bis 56, bekannt sind. Diese acrylierten Oligomeren und Polymeren werden vorzugsweise als Bindemittel eingesetzt.

Weitere besonders bevorzugte acrylierte Dimere und Oligomere sind die Isocyanatoacrylate. Sie werden vorzugsweise als Vernetzungsmittel eingesetzt.

Besonders bevorzugt werden Isocyanatoacrylate oder Gemische aus Isocyanatoacrylaten verwendet, die

- flexibilisierende Segmente, die als Bestandteil dreidimensionaler Netzwerke deren Glasübergangstemperatur Tg emiedrigen, und

- hartmachende Segmente, die als Bestandteil dreidimensionaler Netzwerke deren Glasübergangstemperatur Tg erhöhen,

enthalten. Ganz besonders bevorzugt wird ein Gemische aus mindestens einem Isocyanatoacrylat, das flexibilisierende Segmente enthält, und mindestens einem Isocyanatoacrylat, das hartmachende Segmente enthält, verwendet.

Die flexibilisierenden Segmente sind vorzugsweise zweibindige organische Reste. Bevorzugt werden die flexibilisierenden Segmente aus der Gruppe, bestehend aus zweibindigen aliphatischen Kohlenwasserstoffresten und zweibindigen, Heteroatome enthaltenden, aliphatischen Kohlenwasserstoffresten, ausgewählt.

Beispiele geeigneter flexibilisierender, zweibindiger organischer Reste dieser Art sind substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können, sofern die Kohlenstoffketten zwischen den Isocyanatgruppen und den cyclischen Gruppen jeweils mehr als zwei Kohlenstoffatome enthalten.

Beispiele gut geeigneter linearer Alkandiyl-Reste sind sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethylen.

Beispiele gut geeigneter Alkandiyl-Reste, die in der Kohlenstoffkette auch cyclische Gruppen enthalten, sind 2-Heptyl-1-pentyl-cyclohexan-3,4-bis(non-9-yl), Cyclohexan-1,2-, 1,4- oder -1,3-bis(eth-2-yl), Cyclohexan-1,3-bis(prop-3-yl) oder Cyclohexan-1,2-, 1,4- oder 1,3-bis(but-4-yl).

Weitere Beispiele geeigneter zweibindiger organischer Reste, die Heteroatome enthalten, sind zweiwertige Polyesterreste mit wiederkehrenden Polyesteranteilen der Formel -(-CO-$(CHR^1)_m$- $CH_2$-O-)-aus. Hierbei ist der Index m bevorzugt 4 bis 6 und der Substituent $R^1$ = Wasserstoff, ein Alkyl-, Cycloalkyl- oder Alkoxy-Rest. Kein Substituent enthält mehr als 12 Kohlenstoffatome.

Weitere Beispiele geeigneter zweibindiger organischer Reste, die Heteroatome enthalten, sind zweiwertige lineare Polyetherreste, vorzugsweise mit einem zahlenmittleren Molekulargewicht von 400 bis 5.000, insbesondere von 400 bis 3.000. Gut geeignete Polyetherreste haben die allgemeine Formel -(-O-(CHR$^2$)$_o$-)$_p$O-, wobei der Substituent R$^2$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherreste, die sich von Poly(oxyethylen)glykolen, Poly(oxypropylen)glykolen und Poly(oxybutylen)glykolen ableiten, genannt.

Des weiteren kommen auch lineare zweibindige Siloxanreste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste sowie Ethylen-Propylen-Dienreste in Betracht.

Als Substitutienten kommen alle organischen funktionellen Gruppen in Betracht, welche im wesentlichen inert sind, d. h., dass sie keine Reaktionen mit den Bestandteilen der erfindungsgemäßen Beschichtungsstoffe eingehen.

Beispiele geeigneter inerter organischer Reste sind Alkylgruppen, insbesondere Methylgruppen, Halogenatome, Nitrogruppen, Nitrilgruppen oder Alkoxygruppen.

Von den vorstehend beschriebenen zweibindigen organischen Resten sind die Alkandiyl-Reste, die keine Substituenten und keine cyclischen Gruppen in der Kohlenstoffkette enthalten, von Vorteil und werden deshalb bevorzugt verwendet.

Die hartmachenden Segmente sind zwei- oder mehrbindige organische Reste. Vorzugsweise werden zweibindige organische Reste verwendet. Daneben können in untergeordneten Mengen mehrbindige, insbesondere dreibindige, organische Reste eingesetzt werden, durch die die Vernetzungsdichte beeinflusst werden kann.

Beispiele gut geeigneter hartmachender Segmente sind

- zweibindige cycloaliphatische Reste, bei denen innerhalb des Isocyanatoacrylats mindestens eine verknüpfende Bindung direkt zur cycloaliphatischen Struktureinheit führt,

- sowie zweibindige aliphatische Reste, bei denen innerhalb des Isocyanatoacrylats die beiden verknüpfenden Bindungen zu Methylengruppen führen, die mit einer cycloaliphatischen Struktureinheit verbunden sind.

Die zweibindigen cycloaliphatischen und aliphatischen, insbesondere die cycloaliphatischen, Reste sind vorteilhaft und werden bevorzugt verwendet.

Beispiele geeigneter zweibindiger cycloaliphatischer Reste sind substituierte oder unsubstituierte, vorzugsweise unsubstituierte, Cycloalkandiyl-Reste mit 4 bis 20 Kohlenstoffatomen, wie Cyclobutan-1,3-diyl, Cyclopentan-1,3-diyl, Cyclohexan-1,3- oder -1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4''-diyl, insbesondere 3,3,5-Trimethyl-cyclohexan-1,5-diyl oder Dicyclohexylmethan-4,4'-diyl. Daneben können in untergeordneten Mengen die entsprechenden Triyl-Reste angewandt werden.

Beispiele geeigneter aliphatischer Reste sind Cyclohexan-1,2-, -1,4- oder -1,3-bis(methyl).

Beispiele geeigneter Substituenten sind die vorstehend beschriebenen.

Die vorstehend beschriebenen Isocyanatoacrylate sind übliche und bekannte Verbindungen und werden beispielsweise von der Firma Bayer Aktiengesellschaft unter der Marke Roskydal ® UA VPLS 2337 (flexibilisierend) und Roskydal ® UA VP FWO 3003-77 (hartmachend) vertrieben. Vorzugsweise werden sie aus Polyisocyanaten und hydroxylgruppenhaltigen Acrylaten hergestellten (vgl. die europäische Patentanmeldung EP 0 928 800 A 1). Beispiele geeigneter hydroxylgruppenhaltiger Acrylate sind die nachstehend beschriebenen Monomeren (a 1) und/oder (a 2). Beispiele geeigneter Polyisocyanate sind die nachstehend beschriebenen.

Der Speichermodul E' kann vom Fachmann auch über geeignete thermisch härtbare Bestandteile eingestellt werden. Bei der Auswahl der thermisch härtbaren Bestandteil ist es bevorzugt, 5 bis 95, besonders bevorzugt 10 bis 90 und ganz besonders bevorzugt 20 bis 80 Gew.-%, jeweils bezogen auf den in dem Dual-Cure-Stoffgemisch vorliegenden Anteil an thermisch härtbaren Bestandteilen, mindestens eines thermisch härtbaren Bestandteils einzusetzen, der in Bezug auf die thermische Vernetzung eine Funktionalität von > 2 aufweist.

Besonders bevorzugte thermisch härtbare Bestandteile dieser Art sind spezielle hydroxylgruppenhaltige (Meth)Acrylatcopolymerisate, die insbesondere als Bindemittel eingesetzt werden, sowie aliphatische und/oder cycloaliphatische Polyisocyanate und die vorstehend beschriebenen Isocyanatoacrylate, die insbesondere als Vernetzungsmittel eingesetzt werden.

Das thermisch härtbare (Meth)Acrylatcopolymerisat weist vorzugsweise

- eine OH-Zahl von 100 bis 240, bevorzugt in 130 bis 220, besonders bevorzugt 140 bis 190 und insbesondere 145 bis 180 mg KOH/g,

- eine Glasübergangstemperatur Tg von -50 bis +110, bevorzugt -30 bis +80, besonders bevorzugt -30 bis +70, ganz besonders bevorzugt -30 bis +50 und insbesondere -25 bis +40 °C,

- ein zahlenmittleres Molekulargewicht von 1.000 bis 10.000 Dalton, insbesondere 1.500 bis 5.000 Dalton, und

- ein massenmittleres Molekulargewicht von 2.000 bis 40.000 Dalton, insbesondere 3.000 bis 20.000 Dalton, auf.

Das (Meth)Acrylatcopolymerisat enthält eine seiner OH-Zahl entsprechende Menge an hydroxylgruppenhaltigen olefinisch ungesättigten Monomeren (a 1) einpolymerisiert, wobei vorzugsweise eine Mischung der hydroxylgruppenhaltigen Monomeren Monomeren (a 1) und (a 2) verwendet wird, wovon

(a 1) 20 bis 90, vorzugsweise 22 bis 85, bevorzugt 25 bis 80 und insbesondere 28 bis 75 Gew.-%, jeweils bezogen auf die hydroxylgruppenhaltigen Monomeren, aus der Gruppe, bestehend aus 4-Hydroxybutyl(meth)acrylat, 2-Alkyl-propan-1,3-diol-mono(meth)acrylaten und hydroxylgruppenhaltigen cycloaliphatischen olefinisch ungesättigten Monomeren, und
(a 2) 20 bis 80, vorzugsweise 15 bis 78, bevorzugt 20 bis 75 und insbesondere 25 bis 72 Gew.-%, jeweils bezogen auf die hydroxylgruppenhaltigen Monomeren, aus der Gruppe, bestehend aus sonstigen hydroxylgruppenhaltigen olefinisch ungesättigten Monomeren,

ausgewählt werden.

Beispiele geeigneter 2 Alkyl-propan-1,3-diol-mono(meth)acrylate (a1) sind 2-Methyl-, 2-Ethyl-, 2-Propyl-, 2-Isopropyl- oder 2-n-Butyl-propan-1,3-diol-mono(meth)acrylat, wovon 2-Methyl-propan-1,3-diol-mono(meth)acrylat besonders vorteilhaft ist und bevorzugt verwendet wird.

Beispiele geeigneter hydroxylgruppenhaltiger cycloaliphatischer olefinisch ungesättigter Monomere (a 2) sind hydroxylgruppenhaltige cycloaliphatische (Meth)Acrylate, die vorzugsweise aus der Gruppe, bestehend aus 2-, 3- und 4-Hydroxycyclohexyl(meth)acrylat, Hydroxydicyclopentadienyl(meth)acrylat, 1,4-Bis(hydroxymethyl)cyclohexanmono(meth)acrylat oder Octahydro-4,7-methano-1H-inden-dimethanolmono(meth)acrylat, ausgewählt werden.

Beispiele geeigneter sonstiger hydroxylgruppenhaltiger olefinisch ungesättigter Monomere (a 2) sind Hydroxyalkylester von olefinisch ungesättigen Carbon-, Sulfon- und Phosphonsäuren und sauren Phosphor- und Schwefelsäureestern, insbesondere Carbonsäuren, wie Acrylsäure, beta-Carboxyethylacrylat, Methacrylsäure, Ethacrylsäure und Crotonsäure, insbesondere Acrylsäure und Methacrylsäure. Sie leiten sich von einem Alkylenglykol ab, der mit der Säure verestert ist, oder sie sind durch die Umsetzung der Säure mit einem Alkylenoxid wie Ethylenoxid oder Propylenoxid erhältlich. Bevorzugt werden die Hydroxyalkylester, in denen die Hydroxyalkylgruppe bis zu 20 Kohlenstoffatome enthält, verwendet, insbesondere, 2-Hydroxyethyl- oder 3-Hydroxypropylacrylat oder -methacrylat; oder Umsetzungsprodukte aus cyclischen Estern, wie z.B. epsilon-Caprolacton, und diesen Hydroxyalkylestern; oder olefinisch ungesättigte Alkohole wie Allylalkohol; oder Polyole, wie Trimethylolpropanmono- oder diallylether oder Pentaerythritmono-, -di- oder triallylether; verwendet. Diese höherfunktionellen Monomeren (a 2) werden im allgemeinen nur in untergeordneten Mengen eingesetzt, Im Rahmen der vorliegenden Erfindung sind hierbei unter untergeordneten Mengen an höherfunktionellen Monomeren (a 2) solche Mengen zu verstehen, welche nicht zur Vemetzung oder Gelierung der (Meth)Acrylatcopolymerisate führen, es sei denn, sie sollen in der Form von vemetzten Mikrogelteilchen vorliegen.

Des weiteren kommt ethoxylierter und/oder propoxylierter Allylakohol, der von der Firma Arco Chemicals vertrieben wird, oder 2-Hydroxyalkylallylether, insbesondere 2-Hydroxyethylallylether, als Monomere (a 2) in Betracht. Sofern verwendet, werden sie vorzugsweise nicht als alleinige Monomere (a 2), sondern in einer Menge von 0,1 bis 10 Gew.-%, bezogen auf das (Meth)Acrylatcopolymerisat, eingesetzt.

Des weiteren kommen Umsetzungsprodukte aus den vorstehend aufgeführten olefinisch ungesättigten Säuren, insbesondere Acrylsäure und/oder Methacrylsäure, mit dem Glycidylester einer in alpha-Stellung verzweigten Monocarbonsäure mit 5 bis 18 Kohlenstoffatomen je Molekül, insbesondere eine Versatic® -Säure, oder anstelle der Umsetzungsprodukte eine äquivalenten Menge an den vorstehend aufgeführten olefinisch undgesättigten Säuren, insbesondere Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic® -Säure (vgl. Römpp Lexikon Lacke und Druckfarben, Georg Thieme Verlag, Stuttgart, New York, 1998, »Versatic® -Säuren«, Seiten 605 und 606), umgesetzt wird, als Monomere (a 2) in Betracht.

Nicht zuletzt sind Acryloxysilan-enthaltende Vinylmonomere als Monomere (a 2) geeignet, die durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppehaltiger Monomere (a 1) und (a 2) herstellbar sind.

Außer den Hydroxylgruppen können die (Meth)acrylatcopolymerisate im statistischen Mittel mindestens eine, insbesondere mindestens zwei, übliche und und bekannte reaktive funktionelle Gruppe(n), die mit komplementären reaktiven funktionellen Gruppen thermisch initiierte Vernetzungsreaktionen eingehen können, im Molekül enthalten.

Die Auswahl der jeweiligen komplementären reaktiven funktionellen Gruppen richtet sich zum einen danach, dass sie bei der Herstellung der Bindemittel sowie bei der Herstellung, der Lagerung, der Applikation und dem Härtungsprozess keine unerwünschten Reaktionen, insbesondere keine vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Die komplementären reaktiven funktionellen Gruppen können mit Hilfe üblicher und bekannter olefinisch ungesättigter Monomere (a 3), die die betreffenden reaktiven funktionellen Gruppen enthalten, oder durch übliche und bekannte polymeranaloge Reaktionen in die (Meth)Acrylatcoplymerisate eingeführt werden.

Darüber hinaus können die (Meth)Acrylatcopolymerisate noch mindestens ein olefinisch ungesättigtes Monomer (a 4) enthalten, das im wesentlichen oder völlig frei von reaktiven funktionellen Gruppen ist (Neutralmonomere). Beispiele geeigneter Monomere (a 4) werden in der deutschen Patentanmeldung DE 198 50 243 A 1, Seite 2, Zeilen 54 bis 66, und Seite 3, Zeilen 20 bis 42, beschrieben. Von diesen werden die cycloaliphatischen Monomere (a 4) bevorzugt verwendet. Besonders bevorzugt werden sie aus der Gruppe, bestehend aus Cyclohexyl-, 4-tert.-Butylcyclohexyl-, Isobomyl- oder Dicyclopentadienyl(meth)acrylat, ausgewählt, die, wie vorstehend beschrieben, auch die Glasübergangstemperaturen Tg der Bindemittel erhöhen.

Die Monomeren (a 1) und (a 2) sowie (a 3) und/oder (a 4) werden so ausgewählt, dass die vorstehend angegebenen OH-Zahlen und Glasübergangstemperaturen Tg resultieren. Außerdem werden die Monomeren (a 3), die reaktive funktionelle Gruppen enthalten, nach Art und Menge so ausgewählt, dass sie die Vernetzungsreaktionen der Hydroxylgruppen mit den nachstehend beschriebenen Polyisocyanaten oder den vorstehend beschriebenen Isocyanatoacrylaten nicht inhibieren oder völlig verhindern.

Die Auswahl - der Monomeren (a) zur Einstellung der Glasübergangstemperaturen kann vom Fachmann unter Zuhilfenahme der folgenden Formel von Fox, mit der die Glasübergangstemperaturen von Poly(meth)acrylaten näherungsweise berechnet werden können, vorgenommen werden:

$$1/Tg = \sum_{n=1}^{n=x} W_n/Tg_n; \qquad \sum_n W_n = 1$$

Tg = Glasübergangstemperatur des Poly(meth)acrylats;
$W_n$ = Gewichtsanteil des n-ten Monomers;
$Tg_n$ = Glasübergangstemperatur des Homopolymers aus dem n-ten Monomer und
x = Anzahl der verschiedenen Monomeren.

Die Herstellung der erfindungsgemäß zu verwendenden (Meth)Acrylatcopolymerisate weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck bei Temperaturen von vorzugsweise 50 bis 200°C.

Geeignete Copolymerisationsverfahren sind allgemein bekannt und brauchen nicht näher erläutert zu werden. Beispielsweise kann die Copolymerisation in Polyolen als Reaktionsmedium durchgeführt werden, wie dies in der deutschen Patentanmeldung DE 198 50 243 A 1 beschrieben wird.

Beispiele geeigneter Initiatoren für die radikalische Copolymerisation sind Dialkylperoxide, Hydroperoxide, Perester, Peroxodisulfate, Azodinitrile, C-C-spaltende Initiatoren oder eine Kombination eines nicht oxidierenden Initiators mit Wasserstoffperoxid.

Besonders vorteilhaft sind erfindungsgemäße Stoffgemische, die mindestens eines, insbesondere eines, der vorstehend beschriebenen (Meth)Acrylatcopolymerisate als Bindemittel enthalten. In manchen Fällen kann es aber vorteilhaft sein, mindestens zwei, insbesondere zwei, (Meth)Acrylatcopolymerisate zu verwenden, die im Rahmen der vorstehend angegebenen wesentlichen Bereiche für OH-Zahl, Glasübergangstemperatur Tg und zahlen- und massenmittleres Molekulargewicht ein unterschiedliches Eigenschaftsprofil aufweisen.

Als Polyisocyanate kommen alle auf dem Lackgebiet üblicherweise verwendeten so genannten Lackpolyisocyanate in Betracht. Vorzugsweise werden sie aus der Gruppe der aliphatischen, cycloaliphatischen und aliphatischcycloaliphatischen Polyisocyanate ausgewählt. Vorzugsweise enthalten sie im statistischen Mittel 2,1 bis 10, insbesondere 2,1 bis 6 Isocyanatgruppen im Molekül. Besonders bevorzugt enthalten sie im statistischen Mittel mindestens eine Isocyanat-, Biuret-, Allophanat-, Iminooxadiazindion-, Urethan-, Harnstoff-, Carbodiimid- und/oder Uretdiongruppe im Molekül. Außerdem kommen hochviskose Polyisocyanate, Polyisocyanatpartikel, die an ihrer Oberfläche durch Harnstoffbildung und/oder Blockierung desaktivierte Isocyanatgruppen enthalten, Nonyltriisocyanat (NTI) und Addukte von Polyisocyanaten mit isocyanatreaktiven funktionellen Gruppen enthaltenden Dioxanen, Dioxolanen und Oxazolidinen in Betracht. Ganz besonders bevorzugt werden cycloaliphatische Polyisocyanate, insbesondere auf Basis von Dicyclohexylmethandiisocyanat oder Isophorondiisocyanat, verwendet.

Der Verlustfaktor tanδ kann vom Fachmann durch Auswahl von Art und Anteil der flexibilisierenden und hartmachenden Segmenten in den Bindemitteln und/oder den Vernetzungsmitteln eingestellt werden. Im allgemeinen gilt, dass der Verlustfaktor tanδ umso höher wird, je höher der Anteil an flexibilisierenden Segmenten ist. Er wird somit auch durch die Glasübergangstemperaturen Tg der Bindemittel und/oder Vernetzungsmittel beeinflusst. Beispiele für flexibilisierende Segmente sind die vorstehend beschriebenen. Ein Beispiel für ein Vernetzungsmittel mit flexibilisierenden Segmenten ist Hexamethylendiisocyanat. Flexibilisierend wirken beispielsweise auch 4-Hydroxybutyl(meth)acrylat oder die üblichen und bekannten Polysiloxanmakromonomeren eines zahlenmittleren Molekulargewichts von 1.000 bis 40.000.

Art und Anteil der flexibilisierenden und hartmachenden Segmenten können auch Einfluss auf den Speichermodul E' haben. Diese Wechselwirkung kann vom Fachmann mit Hilfe einiger weniger empirischer Untersuchungen so beeinflusst werden, dass der erfindungsgemäß einzustellende Speichermodul E' und der erfindungsgemäß einzustellende Verlustfaktor tanδ in einfacher Weise eingestellt werden können.

Die erfindungsgemäß zu verwendenden Stoffgemische enthalten mindestens einen Fotoinitiator, vorzugsweise mindestens zwei, Fotoinitiatoren in einer Menge von der vorzugsweise 0,05 bis 8, bevorzugt 0,1 bis 5, besonders bevorzugt 0,2 bis 3 und insbesondere 0,5 bis 2 Gew.-%, jeweils bezogen auf den Festkörper des erfindungsgemäßen Beschichtungsstoffs. Beispiele geeigneter Fotoinitiatoren werden beispielsweise in Römpp Lexikon Lacke und Druckfarben, Georg Thieme Verlag, Stuttgart, New York, 1998, Seiten 444 bis 446, beschrieben.

Darüber hinaus kann das erfindungsgemäß zu verwendende Dual-Cure-Stoffgemisch noch mindestens einen Zusatzstoff, ausgewählt aus der Gruppe, bestehend aus physikalisch härtenden, von den vorstehend beschriebenen Bindemitteln verschiedenen Bindemitteln; von den vorstehend beschriebenen Isocyanatoacrylaten und Polyisocyanaten verschiedenen Vernetzungsmitteln; thermisch härtbaren Reaktivverdünnern; molekulardispers löslichen Farbstoffen; Lichtschutzmitteln, wie UV-Absorbern und reversiblen Radikalfängern (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlern; Verlaufmitteln; filmbildenden Hilfsmitteln; Rheologiehilfsmitteln, wie Verdicker und strukturviskose Sag control agents, SCA; Flammschutzmitteln; Korrosionsinhibitoren; Rieselhilfen; Wachsen; Sikkativen; Bioziden und Mattierungsmitteln, enthalten.

Weitere Beispiele geeigneter Zusatzstoffe, die im wesentlichen oder völlig aromatenfrei sind, werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, im Detail beschrieben.

Besonders bevorzugt werden Rheologiehilfsmittel, insbesondere die strukturviskosen Sag control agents, eingesetzt. Sie enthalten vorzugsweise mindestens ein im wesentlichen oder völlig aromatenfreies Bindemittel und mindestens einen Harnstoff und/oder Harnstoffderivat. Bevorzugt sind auch die Harnstoffe und/oder Harnstoffderivate im wesentlichen oder völlig aromatenfrei.

Beispiele geeigneter Bindemittel sind die vorstehend beschriebenen. Die Harnstoffe und Harnstoffderivate werden vorzugsweise hergestellt, indem man mindestens ein Polyisocyanat mit mindestens einem Polyamin mit primären und/oder sekundären Aminogruppen und mindestens einem primären und/oder sekundären Monoamin und/oder Wasser umsetzt. Beispiele geeigneter Polyisocyanate sind die vorstehend beschriebenen. Beispiele geeigneter Polyamine sind Polyethylenimin, Triethylentetramin, Diethylentriamin, Tripropylentetramin, Dipropylentriamin, Methylendiamin, Ethylendiamin, 1,2- und 1,3-Propylendiamin, 1,4-, 1,3- und 1,2-Butandiamin und 1,4-, 1,3-, und 1,2-Diaminocyclohexan. Beispiele geeigneter Monoamine sind Methoxypropylamin, n-Hexylamin und 2,4-Dimethylcyclohexylamin.

Die erfindungsgemäßen Stoffgemische, die die vorstehend beschriebenen Bestandteile enthalten, werden insbesondere als Klarlacke für die Herstellung von Klarlackierungen oder als Ausgangsprodukte für die Herstellung von klaren, transparenten Folien und Formteilen verwendet.

Die erfindungsgemäßen Stoffgemische können indes auch pigmentiert sein. Vorzugsweise enthalten sie dann noch mindestens ein Pigment, ausgewählt aus der Gruppe, bestehend aus organischen und anorganischen, transparenten und deckenden, farb- und/oder effektgebenden, elektrisch leitfähigen, magnetisch abschirmenden, fluoreszierenden und korrosionsschützenden Pigmenten, Füllstoffen und Nanopartikeln.

Die pigmentierten erfindungsgemäßen Stoffgemische werden insbesondere als Elektrotauchlacke, Füller, Basislacke und Unidecklacke zur Herstellung von Elektrotauchlackierungen, Füllerlackierungen oder Steinschlagschutzgrundierungen, Basislackierungen und Unidecklackierungen oder zur Herstellung von pigmentierten Folien und Formteilen eingesetzt.

Werden ausschließlich nicht deckende, transparente Pigmente, insbesondere Nanopartikel, verwendet, können die pigmentierten erfindungsgemäßen Stoffgemische auch als Klarlacke oder für die Herstellung von klaren, transparenten Folien und Formteilen verwendet werden.

Die erfindungsgemäßen Stoffgemische werden durch Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer vorzugsweise unter Ausschluß von aktinischer Strahlung, hergestellt.

Die resultierenden erfindungsgemäßen Stoffgemische sind konventionelle, organische Lösemittel enthaltende Stoffgemische, wäßrige Stoffgemische, im wesentlichen oder völlig lösemittel- und wasserfreie flüssige Stoffgemische (100%-Systeme), im wesentlichen oder völlig lösemittel- und wasserfreie feste Pulver oder im wesentlichen oder völlig lösemittelfreie Pulversuspensionen (Pulverslurries). Außerdem können sie Einkomponentensysteme, in denen die Bindemittel und die Vernetzungsmittel nebeneinander vorliegen, oder Zwei- oder Mehrkomponentensysteme, in denen die Bindemittel und die Vernetzungsmittel bis kurz vor der Applikation getrennt voneinander vorliegen, sein.

Je nach Verwendungszweck werden erfindungsgemäßen Stoffgemische auf übliche und bekannte temporäre oder permanente Substrate appliziert.

Vorzugsweise werden für die Herstellung von erfindungsgemäßen Folien und Formteilen übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.

Werden die erfindungsgemäßen Stoffgemische für die Herstellung von Beschichtungen, Klebstoffen und Dichtungen verwendet, werden permanente Substrate eingesetzt, wie Kraftfahrzeugkarosserien und Teile hiervon, Bauwerke im Innen- und Außenbereich und Teile hiervon, Türen, Fenster, Möbel, Glashohlkörper, Coils, Container, Emballagen, Kleinteile, elektrotechnische Bauteile und Bauteile für weiße Ware. Die erfindungsgemäßen Folien und Formteile können ebenfalls als Substrate dienen.

Methodisch weist die Applikation der erfindungsgemäßen Stoffgemische keine Besonderheiten auf, sondern kann durch alle üblichen und bekannten, für das jeweilige Stoffgemisch geeigneten Applikationsmethoden, wie z.B. Elektrotauchlackieren, Wirbelbettbeschichten, Spritzen, Sprühen, Rakeln, Streichen, Gießen, Tauchen, Träufeln oder Walzen erfolgen. Vorzugsweise werden Spritzapplikationsmethoden angewandt, es sei denn es handelt sich um Pulver.

Auch die Applikation der Pulver weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Bei der Applikation empfiehlt es sich unter Ausschluss von aktinischer Strahlung zu arbeiten, um eine vorzeitige Vernetzung der Stoffgemische zu vermeiden.

Die Härtung der erfindungsgemäßen Stoffgemische erfolgt im allgemeinen nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung der applizierten Stoffgemische und zum Verdunsten von flüchtigen Bestandteilen wie gegebenenfalls vorhandenem Lösemittel. Die Ablüftung kann durch eine erhöhte Temperatur, die zu einer Härtung noch nicht ausreicht, und/oder durch eine reduzierte Luftfeuchtigkeit beschleunigt werden.

Die thermische Härtung der applizierten Stoffgemische erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Vorzugsweise wird bei der Härtung mit aktinischer Strahlung eine Strahlendosis von $10^3$ bis $3 \times 10^4$, vorzugsweise $2 \times 10^3$ bis $2 \times 10^4$, bevorzugt $3 \times 10^3$ bis $1,5 \times 10^4$ und insbesondere $5 \times 10^3$ bis $1,2 \times 10^4$ Jm$^{-2}$ eingesetzt. Dabei liegt die Strahlenintensität bei $1 \times 10^0$ bis $3 \times 10^5$, vorzugsweise $2 \times 10^0$ bis $2 \times 10^5$, bevorzugt $3 \times 10^0$ bis $1,5 \times 10^5$ und insbesondere $5 \times 10^0$ bis $1,2 \times 10^5$ Wm$^{-2}$.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls dotiert sind, oder Elektronenstrahlquellen. Deren Anordnung ist im Prinzip bekannt und kann den Gegebenheiten des Werkstücks und der Verfahrensparameter angepasst werden. Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, in der deutschen Patentanmeldung DE 198 18 735 A 1, Spalte 10, Zeile 31, bis Spalte 11, Zeile 16, in R. Stephen Davidson, »Exploring the Science, Technology and Applications of U.V. and E.B. Curing«, Sita Technology Ltd., London, 1999, , oder in Dipl.-Ing. Peter Klamann, »eltosch System-Kompetenz, UV-Technik, Leitfaden für Anwender«, Seite 2, Oktober 1998, beschrieben. Besonders bevorzugt wird die Härtung mit aktinischer Strahlung unter einer sauerstoffabgereicherten Atmosphäre durchgeführt. "Sauerstoffabgereichert" bedeutet, dass der Gehalt der Atmosphäre an Sauerstoff geringer ist als der Sauerstoffgehalt von Luft (20,95 Vol.-%). Vorzugsweise liegt der maximale Gehalt der sauerstoffabgereicherten Atmosphäre bei 18, bevorzugt 16, besonders bevorzugt 14, ganz besonders bevorzugt 10 und insbesondere 6,0 Vol-%.

Sowohl die thermische Härtung als auch die Härtung mit aktinischer Strahlung können stufenweise durchgeführt werden. Dabei können sie hintereinander (sequenziell) oder gleichzeitig erfolgen. Erfindungsgemäß ist die sequenzielle Härtung von Vorteil und wird deshalb bevorzugt verwendet. Es ist dabei von besonderem Vorteil, die thermische Härtung nach der Härtung mit aktinischer Strahlung durchzuführen.

Die erfindungsgemäßen Stoffgemische werden zur Herstellung von gehärteten, vorzugsweise duroplastischen, Materialien, insbesondere zur Herstellung von Formteilen und Folien oder als Beschichtungsstoffe, Klebstoffe und Dichtungsmassen zur Herstellung von Beschichtungen, Klebschichten und Dichtungen, verwendet.

Die resultierenden erfindungsgemäßen duroplastischen Materialien, insbesondere die Folien, Formteile, Beschichtungen, Klebschichten und Dichtungen eignen sich hervorragend für das Beschichten, Verkleben, Abdichten, Umhüllen und Verpacken von Kraftfahrzeugkarosserien und Teile hiervon, Bauwerken im Innen- und Außenbereich und Teilen hiervon, Türen, Fenstern, Möbeln, Glashohlkörpem, Coils, Container, Emballagen, Kleinteilen, wie Muttern, Schrauben, Felgen oder Radkappen, elektrotechnischen Bauteilen, wie Wickelgüter (Spulen, Statoren, Rotoren), und Bauteilen für weiße Ware, wie Radiatoren, Haushaltsgeräte, Kühlschrankverkleidungen oder Waschmaschinenverkleidungen.

Vor allem aber werden die erfindungsgemäßen Stoffgemische als Beschichtungsstoffe, insbesondere als Elektrotrauchlacke, Füller, Steinschfagschutzgrundierungen, Unibasislacke, Wasserbasislacke und/oder Klarlacke, insbesondere Klarlacke, zur Herstellung farb- und/oder effektgebender, elektrisch leitfähiger, magnetisch abschirmender, fluoreszierender und korrosonsschützender Ein- oder Mehrschichtlackierungen, insbesondere farb- und/oder effektgebender Mehrschichtlackierungen, eingesetzt. Für die Herstellung der Mehrschichtlackierungen können Nass-in-nass-Verfahren und Aufbauten angewandt werden, die beispielsweise aus der deutschen Patentanmeldung DE 199 30 067 A 1, Seite 15, Zeile 23, bis Seite 16, Zeile 36, bekannt sind. Es ist ein ganz wesentlicher Vorteil des erfindungsgemäßen Verfahrens, dass sämtliche Schichten der erfindungsgemäßen Mehrschichtlackierungen aus den erfindungsgemäßen Stoffgemischen hergestellt werden können.

Von besonderem Vorteil ist es, die Klarlackierung aus den erfindungsgemäßen Stoffgemischen herzustellen. Bei den Klarlackierungen handelt es sich üblicherweise um die äußerste Schicht von Mehrschichtlackierungen, die wesentlich den optischen Gesamteindruck (Appearance) bestimmt und die farb- und/oder effektgebenden Schichten vor mechanischer und chemischer Schädigung und Schädigung durch Strahlung schützt. Deswegen machen sich auch Defizite in der Härte, Kratzfestigkeit, Chemikalienbeständigkeit und der Stabilität gegenüber Vergilbung bei der Kladakkierung besonders stark bemerkbar. So aber weisen die erfindungsgemäßen Klarlackierungen nur eine geringe Vergilbung auf; insbesondere ist ihr Gelbwert nach DIN 6167 unmittelbar nach der Aushärtung < 2 Einheiten, und nach dem Überbrennen bei 185 °C steigt der Gelbwert höchstens um 4,5 Einheiten an. Sie sind hoch kratzfest und zeigen nach dem Zerkratzen nur sehr geringe Glanzverluste.

Die erfindungsgemäßen Substrate, die mit erfindungsgemäßen Beschichtungen beschichtet, mit erfindungsgemäßen Klebschichten verklebt, mit erfindungsgemäßen Dichtung abgedichtet und/oder mit erfindungsgemäßen Folien und/oder Formteilen umhüllt oder verpackt sind, weisen daher hervorragende Dauergebrauchseigenschaften und eine besonders lange Gebrauchsdauer auf.

**Beispiele und Vergleichsversuche**

**Herstellbeispiel 1**

**Die Herstellung eines Methacrylatcopolymerisats (A 1)**

In einem geeigneten Reaktor, ausgestattet mit einem Rührer, zwei Zuläufen für die Monomermischung und die Initiatorlösung, Stickstoffeinleitungsrohr, Thermometer und Rückflusskühler, wurden 769 Gewichtsteile einer Fraktion aromatischer Kohlenwasserstoffe mit einem Siedebereich von 158 bis 172 °C vorgelegt und auf 140 °C aufgeheizt.

Hiernach wurden unter Rühren während vier Stunden eine Monomermischung aus 160 Gewichtsteilen Cyclohexylmethacrylat, 745 Gewichtsteilen Ethylhexylacrylat, 433 Gewichtsteilen Hydroxyethylmethacrylat, in 240 Gewichtsteilen 4-Hydroxybutylacrylat und 24 Gewichtsteilen Acrylsäure und während 4,75 Stunden eine Initiatorlösung aus 32 Gewichtsteilen tert.-Butylperethylhexanoat in 96 Gewichtsteilen des aromatischen Lösemittels gleichmäßig in den Reaktor dosiert. Mit der Dosierung der Monomermischung wurde 15 Minuten nach dem Start der Dosierung der Initiatorlösung begonnen. Nach der Beendigung der Initiatordosierung wurde das Reaktionsgemisch noch während zwei Stunden bei 140 °C nachpolymerisiert und anschließend abgekühlt.

Die resultierende Lösung des Methacrylatcopolymerisats (A 1) wies einen Festkörpergehalt von 66 Gew.% (eine Stunde Umluftofen/130 °C) auf. Das Methacrylatcopolymerisat (A 1) wies eine OH-Zahl von 175 mg KOH/g Festkörper, eine Glasübergangstemperatur Tg von -22 °C, ein zahlenmittleres Molekulargewicht von 3.908 Dalton, ein massenmittleres Molekulargewicht von 10.170 Dalton und eine Uneinheitlichkeit des Molekulargewichts von 2,6 auf.

**Herstellbeispiel 2**

**Die Herstellung eines Methacrylatcopolymerisats (A 2)**

In einem geeigneten Reaktor, ausgestattet mit einem Rührer, zwei Zuläufen für die Monomermischung und die Initiatorlösung, Stickstoffeinleitungsrohr, Thermometer und Rückflusskühler, wurden 808 Gewichtsteile einer Fraktion aromatischer Kohlenwasserstoffe mit einem Siedebereich von 158 bis 172 °C vorgelegt und auf 140 °C aufgeheizt. Hiernach wurden unter Rühren während vier Stunden eine Monomermischung aus 679 Gewichtsteilen Cyclohexylmethacrylat, 480 Gewichtsteilen n-Butylacrylat, 335 Gewichtsteilen 2-Hydroxyethylmethacrylat und 31 Gewichtsteilen Methacrylsäure und während 4,75 Stunden eine Initiatorlösung aus 121 Gewichtsteilen tertiär-Butylperethylhexanoat in 46 Gewichtsteilen des aromatischen Lösemittels gleichmäßig in den Reaktor dosiert. Mit der Dosierung der Monomermischung wurde 15 Minuten nach dem Start der Dosierung der Initiatorlösung begonnen. Nach der Beendigung der Initiatordosierung wurde das Reaktionsgemisch noch während zwei Stunden bei 140 °C nachpolymerisiert und anschließend abgekühlt.

Die resultierende Lösung des Methacrylatcopolymerisats (A 2) wies einen Festkörpergehalt von 66 Gew.% (eine Stunde Umluftofen/130 °C) auf. Das Methacrylatcopolymerisat (A 1) wies eine OH-Zahl von 95 mg KOH/g Festkörper, eine Glasübergangstemperatur Tg von +22 °C, ein zahlenmittleres Molekulargewicht von 3.336 Dalton, ein massenmittleres Molekulargewicht von 7.975 Dalton und eine Uneinheitlichkeit des Molekulargewichts von 2,4 auf.

**Herstellbeispiel 3**

**Die Herstellung einer Mischung aus Methacrylatcopolymerisat (A 2) und aromatenfreiem Harnstoffderivat (Rheologiehilfsmittel)**

In einem 2l-Becherglas wurden 485 Gewichtsteile der Lösung des Methacrylatcopolymerisats (A 2) des Herstellbeispiels 2, 2,24 Gewichtsteile Ethylendiamin und 3,33 Gewichtsteile Methoxypropylamin vorgelegt. Zur Vorlage wurde unter starkem Rühren mit einem Labordissolver eine Lösung von 9,43 Gewichtsteilen Hexamethylendiisocyanat in 100 Gewichtsteilen Butylacetat innerhalb von 5 Minuten zudosiert. Die Reaktionsmischung wurde noch während 15 Minuten intensiv gerührt. Das resultierende Rheologiehilfsmittel hatte einen Feststoffgehalt von 55%, bestimmt in einem Umluftofen (1 h bei 130 °C).

**Beispiele 1**

**Die Herstellung eines von aromatischen Struktureinheiten im wesentlichen freien Klarlacks**

Der Klarlack des Beispiels 1 wurde durch Vermischen der in der Tabelle 1 angegebenen Bestandteile und Homogenisieren der resultierenden Mischung hergestellt.

**Tabelle 1: Die stoffliche Zusammensetzung des Klarlacks des Beispiels 1**

| Bestandteil | Gewichtsteile: |
|---|---|
| Stammlack: | |
| Methacrylatcopolymerisat (A 1) des Herstellbeispiels 1 | 35 |
| Rheologiehilfsmittel gemäß Herstellbeispiel 3 | 15 |
| Dipentaerythritpentaacrylat | 20 |

Tabelle fortgesetzt

| Bestandteil | Gewichtsteile: |
|---|---|
| UV-Absorber (substituiertes Hydroxyphenyltriazin) | 1,0 |
| HALS (N-Methyl-2,2,6,6-tetramethylpiperidinylester) | 1,0 |
| Additiv (Byk ® 385 der Firma Byk Chemie) | 0,7 |
| Butylacetat 98-100 | 25,8 |
| Irgacure ® 184 (handelsüblicher Fotoinitiator der Firma Ciba Specialty Chemicals) | 1,0 |
| Lucirin ® TPO (handelsüblicher Fotoinitiator der Firma BASF AG auf Basis von Acylphosphinoxid) | 0,5 |
| **Summe:** | **100** |
| Vernetzungsmittelkomponente: | |
| **Summe:** | **37,6** |
| Vernetzungsmittel 1: | |
| Isocyanatoacrylat Roskydal ® UA VPLS 2337 der Firma Bayer AG (Basis: Trimeres Hexamethylen-diisocyanat; Gehalt an Isocyanatgruppen: 12 Gew.-%) | 22,54 |
| Vernetzungsmittel 2: | |
| Isocyanatoacrylat Roskydal ® UA VP FWO 3003-77 der Firma Bayer AG auf der Basis des Trimeren von Isophorondiisocyanat (70,5 %ig in Butylacetat; Viskosität: 1.500 mPas; Gehalt an Isocyanatgruppen: 6,7 Gew.-%) | 5,64 |
| Vernetzungsmittel 3: | |
| Polyisocyanat auf Basis von Isophorondiiso-cyanat (Desmodur ® N 3300 der Firma Bayer AG) | 6,6 |
| Butylacetat 98-100 | 2,82 |

Der Festkörper des Klarlacks des Beispiels 1 enthielt 1,25 Gew.-% aromatische Struktureinheiten.

Der Klarlacke wies eine sehr gute Topfzeit und ein sehr gutes Applikationsverhalten auf.

Von dem Klarlack des Beispiels 1 wurden freie, über Polypropylen applizierte Filme mit einer Schichtdicke von $40 \pm 10$ $\mu$m hergestellt und mittels DMTA untersucht. Die Aushärtung der Filme erfolgte dabei durch Bestrahlung mit UV-Licht einer Dosis von 1.000 mJcm$^{-2}$ und einer Strahlenintensität von 83 Wm$^{-2}$ mit einer eisendotierten Quecksilber-dampflampe der Firma IST und einer abschließenden thermischen Härtung während 30 Minuten bei 120 °C. Von dem homogenen, ausgehärteten freien Filmen wurden mittels DMTA-Messungen die viskoelastischen Kenngrößen und die Glasübergangstemperatur Tg unter den folgenden Bedingungen ermittelt:

1. Gerät: DMA MK IV (Firma Rheometric Scientific)
2. Bedingungen: Tensile mode, Amplitude 0,2%, Frequenz 1 Hz
3. Temperatur-Rampe: 1°C/min von Raumtemperatur bis 200°C.

Die Ergebnisse finden sich in der Tabelle 2.

**Tabelle 2: Viskoelastische Kenngrößen und Glasübergangstemperatur Tg der Filme des Beispiels 1**

| Parameter | Beispiel 1 |
|---|---|
| Glasübergangstemperatur(°C) | 79 |
| Speichermodul E'(Pa) | $10^{8,5}$ |
| Verlustfaktor tan$\delta$ bei 20 °C | 0,04 |

**Beispiel 2**

**Die Herstellung einer weißen Mehrschichtlackierung**

Für die Herstellung der weißen Mehrschichtlackierung des Beispiels 2 wurde der Klarlack des Beispiels 1 verwendet.

Zur Herstellung der Mehrschichtlackierung wurden Stahltafeln nacheinander mit einer kathodisch abgeschiedenen und während 20 Minuten bei 170 °C eingebrannten Elektrotauchlackierung einer Trockenschichtdicke von 18 bis 22 $\mu$m beschichtet. Anschließend wurden die Stahltafeln mit einem handelsüblichen Zweikomponenten-Wasserfüller von BASF Coatings AG, wie er üblicherweise für Kunststoffsubstrate verwendet wird, beschichtet. Die resultierende Füllerschicht wurde während 30 Minuten bei 90 °C eingebrannt, so dass eine Trockenschichtdicke von 35 bis 40 $\mu$m

resultierte. Hiernach wurde ein handelsüblicher weißer Wasserbasislack von BASF Coatings AG (Fimweiß) mit einer Schichtdicke von jeweils 12 bis 15 μm appliziert, wonach die resultierenden Wasserbasislackschichten während zehn Minuten bei 80 °C abgelüftet wurden. Anschließend wurde der Klarlack mit einer Schichtdicke von jeweils 40 bis 45 μm in einem Kreuzgang mit einer Fließbecherpistole pneumatisch appliziert.

In einer ersten Serie erfolgte die Härtung der Wasserbasislackschichten und der Klarlackschichten während 5 Minuten bei Raumtemperatur, während 10 Minuten bei 80 °C, gefolgt von einer Bestrahlung mit UV-Licht einer Dosis von $10^4$ Jm$^{-2}$ (1.000 mJcm$^{-2}$) und einer Strahlenintensität von 83 Wm$^{-2}$ mit einer eisendotierten Quecksilberdampflampe der Firma IST, und abschließend während 20 Minuten bei 140 °C. Die Härte, Kratzfestigkeit, Chemikalienbeständigkeit und Witterungsbeständigkeit und der Glanz waren sehr gut. Der Gelbwert nach DIN 6167 der weißen Mehrschichtlackierungen lag unmittelbar nach dem Einbrennen bei 1,0 Einheiten. Die Mehrschichtlackierung der ersten Serie bildeten den jeweiligen Standard, gegen den die weißen Mehrschichtlackierungen der zweiten bis fünften Serie verglichen wurden.

In der zweiten Serien erfolgte die abschließende. Härtung während 30 Minuten bei 140 °C. Bei der Mehrschichtlackierung nahm der Gelbwert um 0,6 Einheiten gegenüber dem Standard zu.

In der dritten Serien erfolgte die abschließende Härtung während 30 Minuten bei 155 °C. Hierbei nahm der Gelbwert bei der Mehrschichtlackierung um 1,2 Einheiten gegenüber dem Standard zu.

In der vierten Serien erfolgte die abschließende Härtung während 30 Minuten bei 170 °C. Hierbei nahm der Gelbwert bei der Mehrschichtlackierung um 3,1 Einheiten gegenüber dem Standard zu.

In der fünften Serien erfolgte die abschließende Härtung während 30 Minuten bei 185 °C. Hierbei nahm der Gelbwert bei der Mehrschichtlackierung um 4,2 Einheiten gegenüber dem Standard zu.

Die Ergebnisse untermauem die hervorragende Überbrennstabilität der erfindungsgemäßen Mehrschichtlackierung.

**Patentansprüche**

1. Thermisch und mit aktinischer Strahlung härtbares (Dual-Cure-) Stoffgemisch, enthaltend-mindestens ein Bindemittel und mindestens ein Vernetzungsmittel, wobei

   (1) der Festkörper des Stoffgemischs, der das aus dem Stoffgemisch herstellbare gehärtete, insbesondere duroplastische, Material aufbaut, max, 10 Gew.-% aromatische Struktureinheiten enthält und
   (2) die Bestandteile des Festkörper des Stoffgemischs so ausgewählt sind, daß das aus dem Stoffgemisch herstellbare gehärtete; insbesondere duroplastische, Material eine Glasübergangstemperatur Tg ≥40°C, gemessen mit der Dynamisch-Mechanischen Thermo-Analyse (DMTA) an freien Filmen mit einer Schichtdicke von 40 ± 10 μm, aufweist, und wobei

   die Bindemittel ausgewählt werden aus der Gruppe bestehend aus acrylierten Polyacrylaten, acrylierten Polyurethanen, Urethanacrylaten, hydroxylgruppenhaltigen (Meth)Acrylatcopolymerisaten und Mischungen davon,und
   die Vernetzungsmittel ausgewählt werden aus der Gruppe bestehend aus aliphatischen Polylsocyanaten, cycloaliphatischen Polyisocyanaten, Isocyanatoacrylaten und Mischungen davon.

2. Dual-Cure-Stoffgemisch nach Anspruch 1, **dadurch gekennzeichnet, dass** der Festkörper des Stoffgemischs max. 7, bevorzugt max. 5, besonders bevorzugt max. 2 und insbesondere weniger als 1 Gew.-% aromatische Strukturen enthält.

3. Dual-Cure-Stoffgemisch nach Anspruch 1 oder 2, **dadurch gekennzeichnet, dass** es im wesentlichen oder völlig aromatenfreie Bindemittel und/oder Vernetzungsmittel enthält.

4. Dual-Cure-Stoffgemisch nach einem der Ansprüche 1 bis 3, **dadurch gekennzeichnet, dass** die Bindemittel als reaktive funktionelle Gruppen Hydroxylgruppen enthalten.

5. Dual-Cure-Stoffgemisch nach einem der Ansprüche 1 bis 4, **dadurch gekennzeichnet, dass** die Vernetzungsmittel als komplementäre reaktive funktionelle Gruppen Isocyanatgruppen enthalten.

6. Dual-Cure-Stoffgemisch nach Anspruch 5, **dadurch gekennzeichnet, dass** mindestens ein Teil der Vernetzungsmittel mindestens eine mit aktinischer Strahlung aktivierbare Bindung enthält.

7. Dual-Cure-Stoffgemisch nach einem der Ansprüche 1 bis 6, **dadurch gekennzeichnet, dass** es mindestens einen Zusatzstoff enthält.

8. Dual-Cure-Stoffgemisch nach Anspruch 7, **dadurch gekennzeichnet, dass** der Zusatzstoff im wesentlichen oder völlig aromatenfrei ist.

9. Dual-Cure-Stoffgemisch nach Anspruch 8, **dadurch gekennzeichnet, dass** der Zusatzstoff aus der Gruppe, bestehend aus Reaktiwerdünnem, Rheologiehilfsmitteln und Fotoinitiatoren ausgewählt werden.

10. Dual-Cure-Stoffgemisch nach Anspruch 9, **dadurch gekennzeichnet, dass** das Rheologiehilfsmittel mindestens ein im wesentlichen oder völlig aromatenfreies Bindemittel und mindestens einen im wesentlichen oder völlig aromatenfreien Harnstoff und/oder ein im wesentlichen oder völlig aromatenfreies Hamstoffderivat enthält.

11. Dual-Cure-Stoffgemisch nach einem der Ansprüche 1 bis 10, **dadurch gekennzeichnet, dass** das aus dem Stoffgemisch herstellbare gehärtete, insbesondere duroplastische, Material eine Glasübergangstemperatur $Tg \geq 50$, bevorzugt $\geq 60$ und insbesondere $\geq 70$ °C aufweist.

12. Dual-Cure-Stoffgemisch nach einem der Ansprüche 1 bis 11, **dadurch gekennzeichnet, dass** das Bindemittel, das Vernetzungsmittel und/oder der Zusatzstoff mindestens ein olefinisch ungesättigtes Monomer einpolymerisiert enthält oder enthalten, dessen Homopolymerisat eine Glasübergangstemperatur $Tg \geq 50$ °C aufweist, und/oder das Vernetzungsmittel und/oder der Zusatzstoff cycloaliphatische Struktureinheiten enthält oder enthalten.

13. Dual-Cure-Stoffgemisch nach Anspruch 12, **dadurch gekennzeichnet, dass** die Homopolymerisate eine Glasübergangstemperatur $Tg \geq 60$, bevorzugt $\geq 75$ und insbesondere $\geq 120$ °C aufweisen.

14. Dual-Cure-Stoffgemisch nach Anspruch 12 oder 13, **dadurch gekennzeichnet, dass** das Bindemittel, das Vernetzungsmittel und/oder der Zusatzstoff, bezogen auf die jeweilige Gesamtmenge, 5 bis 90, bevorzugt 10 bis 70 und insbesondere 25 bis 50 Gew.-% der olefinisch ungesättigten Monomeren, deren Homopolymerisate eine Glasübergangstemperatur $Tg \geq 50$ °C haben, einpolymerisiert enthält oder enthalten.

15. Dual-Cure-Stoffgemisch nach einem der Ansprüche 12 bis 14, **dadurch gekennzeichnet, dass** die olefinisch ungesättigten Monomere aus der Gruppe, bestehend aus hydroxyfunktionellen Monomeren und der von reaktiven funktionellen Gruppen freien Monomeren (Neutralmonomeren), ausgewählt werden.

16. Dual-Cure-Stoffgemisch nach Anspruch 15, **dadurch gekennzeichnet, dass** die Monomeren Neutralmonomeren sind.

17. Dual-Cure-Stoffgemisch nach Anspruch 16, **dadurch gekennzeichnet, dass** die Neutralmonomeren aus der Gruppe, bestehend aus Cyclohexyl-, 4-tert.-Butylcyclohexyl- und Isobornyl(meth)acrlyat, ausgewählt werden.

18. Dual-Cure-Stoffgemisch nach Anspruch 16, **dadurch gekennzeichnet, dass** die Neutralmonomeren Methacrylate sind.

19. Dual-Cure-Stoffgemisch nach Anspruch 17 oder 18, **dadurch gekennzeichnet, dass** das Methacrylat Cyclohexylmethacrylat ist.

20. Dual-Cure-Stoffgemisch nach einem der Ansprüche 1 bis 19, **dadurch gekennzeichnet, dass** das hieraus herstellbare gehärtete, insbesondere duroplastische, Material einen Speichermodul E' im gummielastischen Bereich von mindestens $10^{7,5}$ Pa hat, wie wobei der Speichermodul E' mit der Dynamisch-Mechanischen Thermo-Analyse (DMTA) an freien Filmen mit einer Schichtdicke von $40 \pm 10$ $\mu$m gemessen worden ist.

21. Dual-Cure-Stoffgemisch nach Anspruch 20, **dadurch gekennzeichnet, dass** das duroplastische Material einen Speichermodul im gummielastischen Bereich von mindestens $10^{8,3}$ Pa hat.

22. Dual-Cure-Stoffgemisch nach einem der Ansprüche 1 bis 21, **dadurch gekennzeichnet, dass** das hieraus herstellbare gehärtete, insbesondere duroplastische, Material einen Verlustfaktor $\tan\delta$ bei 20 °C von maximal 0,10 aufweist, wobei das der Verlustfaktor $\tan\delta$ mit der Dynamisch-Mechanischen Thermo-Analyse (DMTA) an freien Filmen mit einer Schichtdicke von $40 \pm 10$ $\mu$m gemessen worden ist.

23. Dual-Cure-Stoffgemisch nach Anspruch 22, **dadurch gekennzeichnet, dass** das gehärtete, insbesondere duroplastische, Material einen Verlustfaktor $\tan\delta$ bei 20 °C von maximal 0,06 aufweist.

24. Dual-Cure-Stoffgemisch nach einem der Ansprüche 1 bis 23, **dadurch gekennzeichnet, dass** es einen Gehalt an mit aktinischer Strahlung aktivierbaren Bindungen von 0,5 bis 6 mEqu/g Festkörper hat.

25. Dual-Cure-Stoffgemisch nach Anspruch 24, **dadurch gekennzeichnet, dass** es einen Gehalt an mit aktinischer Strahlung aktivierbaren Bindungen von 2 bis 3 mEqu/g Festkörper hat.

26. Dual-Cure-Stoffgemisch nach Anspruch 24 oder 25, **dadurch gekennzeichnet, dass** die mit aktinischer Strahlung aktivierbaren Bindungen Kohlenstoff-Kohlenstoff-Doppelbindungen sind.

27. Dual-Cure-Stoffgemisch nach einem der Ansprüche 1 bis 26, **dadurch gekennzeichnet, dass** es

   - mindestens ein hydroxylgruppenhaltiges (Meth)Acrylatcopolymerisat,
   - ein Gemisch aus mindestens einem Isocyanatoacrylat, enthaltend flexibilisierende Segmente, und mindestens einem Isocyanatoacrylat, enthaltend hartmachende Segmente,
   - mindestens einen Reaktiverdünner und
   - mindestens einen Fotoinitiator sowie gegebenfalls
   - mindestens ein aliphatisches und/oder cycloaliphatisches Polyisocyanat,

   enthält.

28. Dual-Cure-Stoffgemisch nach einem der Ansprüche 1 bis 27, **dadurch gekennzeichnet, dass** es ein Beschichtungsstoff, einen Klebstoff, eine Dichtungsmasse oder ein Ausgangsprodukt für Formteile und Folien ist.

29. Dual-Cure-Stoffgemisch nach Anspruch 28, **dadurch gekennzeichnet, dass** der Beschichtungsstoff ein Elektrotrauchlack, ein Füller oder eine Steinschlagschutzgrundierung, ein Unidecklack, ein Basislack oder ein Klarlack ist.

30. Dual-Cure-Stoffgemisch nach Anspruch 28 oder 29, **dadurch gekennzeichnet, dass** die hieraus herstellbaren gehärteten, insbesondere duroplastischen, Materialien Beschichtungen, Klebschichten, Dichtungen, Formteile und Folien sind.

31. Dual-Cure-Stoffgemisch nach Anspruch 30, **dadurch gekennzeichnet, dass** die Beschichtungen Elektrotauchlakkierungen, Füllerlackierungen, Steinschlagschutzgrundierungen, Unidecklackierungen, Basislackierungen oder Klarlackierungen sind.

32. Dual-Cure-Stoffgemisch nach Anspruch 31, **dadurch gekennzeichnet, dass** die Beschichtungen farb- und/oder effektgebende Mehrschichtlackierungen sind.

**Claims**

1. Composition curable thermally and with actinic radiation (dual cure), comprising at least one binder and at least one crosslinking agent, wherein

   (1) the solids of the composition, making up the cured, especially thermoset, material producible from the composition, contains max. 10% by weight of aromatic structural units, and
   (2) the constituents of the solids of the composition are selected so that the cured, especially thermoset, material producible from the composition has a glass transition temperature $T_g \geq 40°C$ as measured by dynamic mechanical thermoanalysis (DMTA) on free films having a thickness of $40 \pm 10 \ \mu m$, and wherein

   the binders are selected from the group consisting of acrylated polyacrylates, acrylated polyurethanes, urethane acrylates, hydroxyl-containing (meth)acrylate copolymers, and mixtures thereof, and
   the crosslinking agents are selected from the group consisting of aliphatic polyisocyanates, cycloaliphatic polyisocyanates, isocyanato acrylates, and mixtures thereof.

2. Dual-cure composition according to Claim 1, **characterized in that** the solids of the composition contains max. 7%, preferably max. 5%, with particular preference max. 2%, and in particular less than 1% by weight of aromatic structures.

3. Dual-cure composition according to Claim 1 or 2, **characterized in that** it comprises binders and/or crosslinking agents substantially or completely free of aromatics.

4. Dual-cure composition according to any of Claims 1 to 3, **characterized in that** the binders contain hydroxyl groups as reactive functional groups.

5. Dual-cure composition according to any of Claims 1 to 4, **characterized in that** the crosslinking agents contain isocyanate groups as complementary reactive functional groups.

6. Dual-cure composition according to Claim 5, **characterized in that** at least part of the crosslinking agents comprises at least one bond which can be activated with actinic radiation.

7. Dual-cure composition according to any of Claims 1 to 6, **characterized in that** it comprises at least one additive.

8. Dual-cure composition according to Claim 7, **characterized in that** the additive is substantially or completely free of aromatics.

9. Dual-cure composition according to Claim 8, **characterized in that** the additive is selected from the group consisting of reactive diluents, rheological aids, and photoinitiators.

10. Dual-cure composition according to Claim 9, **characterized in that** the rheological aid comprises at least one binder substantially or completely free of aromatics and at least one urea and/or one urea derivative substantially or completely free of aromatics.

11. Dual-cure composition according to any of Claims 1 to 10, **characterized in that** the cured, especially thermoset, material producible from the composition has a glass transition temperature $Tg \geq 50°C$, preferably $\geq 60°C$, and in particular $\geq 70°C$.

12. Dual-cure composition according to any of Claims 1 to 11, **characterized in that** the binder, the crosslinking agent and/or the additive contain or contains in copolymerized form at least one olefinically unsaturated monomer whose homopolymer has a glass transition temperature $Tg \geq 50°C$ and/or the crosslinking agent and/or the additive contain or contains cycloaliphatic structural units.

13. Dual-cure composition according to Claim 12, **characterized in that** the homopolymers have a glass transition temperature $Tg \geq 60°C$, preferably $\geq 75°C$, and in particular $\geq 120°C$.

14. Dual-cure composition according to Claim 12 or 13, **characterized in that** the binder, the crosslinking agent and/or the additive, based in each case on the total amount, contain or contains in copolymerized form from 5 to 90%, preferably from 10 to 70%, and in particular from 25 to 50% by weight of the olefinically unsaturated monomers whose homopolymers have a glass transition temperature $Tg \geq 50°C$.

15. Dual-cure composition according to any of Claims 12 to 14, **characterized in that** the olefinically unsaturated monomers are selected from the group consisting of hydroxy-functional monomers and monomers free from reactive functional groups (neutral monomers).

16. Dual-cure composition according to Claim 15, **characterized in that** the monomers are neutral monomers.

17. Dual-cure composition according to Claim 16, **characterized in that** the neutral monomers are selected from the group consisting of cyclohexyl, 4-tert-butylcyclohexyl, and isobornyl (meth)acrylate.

18. Dual-cure composition according to Claim 16, **characterized in that** the neutral monomers are methacrylates.

19. Dual-cure composition according to Claim 17 or 18, **characterized in that** the methacrylate is cyclohexyl methacrylate.

20. Dual-cure composition according to any of Claims 1 to 19, **characterized in that** the cured, especially thermoset, material producible therefrom has a storage modulus E' in the rubber-elastic range of at least $10^{7.5}$ Pa, said storage modulus E' having been measured by means of dynamic mechanical thermoanalysis (DMTA) on free films having a thickness of 40 $\pm$ 10 $\mu$m.

21. Dual-cure composition according to Claim 20, **characterized in that** the thermoset material has a storage modulus in the rubber-elastic range of at least $10^{8.3}$ Pa.

22. Dual-cure composition according to any of Claims 1 to 21, **characterized in that** the cured, especially thermoset, material producible therefrom has a loss factor tan$\delta$ at 20°C of not more than 0.10, said loss factor tan$\delta$ having been measured by means of dynamic mechanical thermoanalysis (DMTA) on free films having a thickness of 40 $\pm$ 10 $\mu$m.

23. Dual-cure composition according to Claim 22,
    **characterized in that** the cured, especially thermoset, material has a loss factor tan$\delta$ at 20°C of not more than 0.06.

24. Dual-cure composition according to any of Claims 1 to 23, **characterized in that** it contains from 0.5 to 6 meq/g solids of bonds which can be activated with actinic radiation.

25. Dual-cure composition according to Claim 24, **characterized in that** it contains from 2 to 3 meq/g solids of bonds which can be activated with actinic radiation.

26. Dual-cure composition according to Claim 24 or 25, **characterized in that** the bonds which can be activated with actinic radiation are carbon-carbon double bonds.

27. Dual-cure composition according to any of Claims 1 to 26, **characterized in that** it comprises

    - at least one hydroxyl-containing (meth)acrylate copolymer
    - a mixture of at least one isocyanato acrylate containing flexibilizing segments and at least one isocyanato acrylate containing hardening segments,
    - at least one reactive diluent, and
    - at least one photoinitiator, and also, if desired,
    - at least one aliphatic and/or cycloaliphatic polyisocyanate.

28. Dual-cure composition according to any of Claims 1 to 27, **characterized in that** it is a coating material, an adhesive, a sealing compound, or a starting product for mouldings and foils.

29. Dual-cure composition according to Claim 28,
    **characterized in that** the coating material is an electrocoat material, a surfacer or an antistonechip primer, a solid-colour topcoat material, a basecoat material or a clearcoat material.

30. Dual-cure composition according to Claim 28 or 29, **characterized in that** the cured, especially thermoset, materials producible therefrom are coatings, adhesive films, seals, mouldings, and foils.

31. Dual-cure composition according to Claim 30, **characterized in that** the coatings are electrocoats, surfacer coats, antistonechip primer coats, solid-colour topcoats, basecoats or clearcoats.

32. Dual-cure composition according to Claim 31, **characterized in that** the coatings are multicoat colour and/or effect paint systems.


## Revendications

1. Mélange de substances durcissable thermiquement et sous l'action d'un rayonnement actinique (à durcissement double), qui contient au moins un liant et au moins un agent de réticulation et dans lequel :

   (1) le corps solide constitué du mélange de substances et préparé à partir du matériau durci et en particulier thermodurcissable préparé à partir du mélange de substances contient au maximum 10 % en poids d'unités structurelles aromatiques et
   (2) les composants du corps solide réalisé à partir du mélange de substances sont sélectionnés de telle sorte que le matériau durci, en particulier thermodurcissable, préparé à partir du mélange de substances présente une température de transition vitreuse Tg, mesurée par thermoanalyse dynamique-mécanique (DMTA) sur des films libres d'une épaisseur de 40 $\pm$ 10 $\mu$m, $\geq$ 40°C, et dans lequel

les liants sont sélectionnés dans l'ensemble constitué des polyacrylates acrylés, des polyuréthanes acrylés, des acrylates d'uréthane, des copolymères de (méth)acrylate qui contiennent des groupes hydroxyle et de leurs mélanges et

les agents de réticulation sont sélectionnés dans l'ensemble constitué des polyisocyanates aliphatiques, des polyisocyanates cycloaliphatiques, des acrylates d'isocyanate et de leurs mélanges.

2. Mélange de substances à durcissement double selon la revendication 1, **caractérisé en ce que** le corps solide du mélange de substances contient au maximum 7, de préférence au maximum 5, de façon particulièrement préférable au maximum 2 et en particulier moins de 1 % en poids de structures aromatiques.

3. Mélange de substances à durcissement double selon la revendication 1 ou 2, **caractérisé en ce qu'**il contient des liants et/ou agents de réticulation essentiellement ou entièrement exempts de substances aromatiques.

4. Mélange de substances à durcissement double selon l'une des revendications 1 à 3, **caractérisé en ce que** les liants contiennent comme groupes fonctionnels réactifs des groupes hydroxyle.

5. Mélange de substances à durcissement double selon l'une des revendications 1 à 4 **caractérisé en ce que** les agents de réticulation contiennent comme groupes fonctionnels réactifs complémentaires des groupes isocyanate.

6. Mélange de substances à durcissement double selon la revendication 5, **caractérisé en ce qu'**au moins une partie des agents de réticulation contient au moins une liaison qui peut être activée par un rayonnement actinique.

7. Mélange de substances à durcissement double selon l'une des revendications 1 à 6, **caractérisé en ce qu'**il contient au moins un additif.

8. Mélange de substances à durcissement double selon la revendication 7, **caractérisé en ce que** l'additif est essentiellement ou entièrement exempt de substances aromatiques.

9. Mélange de substances à durcissement double selon la revendication 8, **caractérisé en ce que** l'additif est sélectionné dans l'ensemble constitué des diluants réactifs, des adjuvants rhéologiques et des photo-initiateurs.

10. Mélange de substances à durcissement double selon la revendication 9, **caractérisé en ce que** l'adjuvant rhéologique contient au moins un liant essentiellement ou entièrement exempt de substances aromatiques et au moins une urée essentiellement ou entièrement exempte de substances aromatiques et/ou un dérivé d'urée essentiellement ou entièrement exempt de substances aromatiques.

11. Mélange de substances à durcissement double selon l'une des revendications 1 à 10, **caractérisé en ce que** le matériau durci et en particulier thermodurcissable préparé à partir du mélange de substances a une température de transition vitreuse $T_g \geq$ 50, de préférence $\geq$ 60 et en particulier $\geq$ 70°C.

12. Mélange de substances à durcissement double selon l'une des revendications 1 à 11, **caractérisé en ce que** le liant, l'agent de réticulation et/ou l'additif contiennent dans leur polymère au moins un monomère oléfiniquement insaturé dont l'homopolymère a une température de transition vitreuse Tg $\geq$ 50°C, et/ou **en ce que** l'agent de réticulation et/ou l'additif contiennent des unités structurelles cycloaliphatiques.

13. Mélange de substances à durcissement double selon la revendication 12, **caractérisé en ce que** les homopolymères ont une température de transition vitreuse $T_g \geq$ 60, de préférence $\geq$ 75 et en particulier $\geq$ 120°C.

14. Mélange de substances à durcissement double selon la revendication 12 ou 13, **caractérisé en ce que** le liant, l'agent de réticulation et/ou l'additif contiennent à l'état polymérisé et par rapport à la quantité totale de 5 à 90, de préférence de 10 à 70 et en particulier de 25 à 50 % en poids de monomères oléfiniquement insaturés dont les homopolymères ont une température de transition vitreuse Tg $\geq$ 50°C.

15. Mélange de substances à durcissement double selon l'une des revendications 12 à 14, **caractérisé en ce que** les monomères oléfiniquement insaturés sont sélectionnés dans l'ensemble constitué des monomères à fonctionnalité hydroxyle et des monomères exempts de groupes fonctionnels réactifs (monomères neutres).

**16.** Mélange de substances à durcissement double selon la revendication 15, **caractérisé en ce que** les monomères sont des monomères neutres.

**17.** Mélange de substances à durcissement double selon la revendication 16, **caractérisé en ce que** les monomères neutres sont sélectionnés dans l'ensemble constitué des (méth)acrylates de cyclohexyle, de 4-tert.-butylcyclohexyle et d'isobornyle.

**18.** Mélange de substances à durcissement double selon la revendication 16, **caractérisé en ce que** les monomères neutres sont des méthacrylates.

**19.** Mélange de substances à durcissement double selon la revendication 17 ou 18, **caractérisé en ce que** le méthacrylate est le méthacrylate de cyclohexyle.

**20.** Mélange de substances à durcissement double selon l'une des revendications 1 à 19, **caractérisé en ce que** le matériau durci, en particulier thermodurcissable, préparé à partir de ce mélange a un module d'accumulation E' dans la plage du caoutchouc élastique d'au moins $10^{7,5}$ Pa, le module d'accumulation E' étant mesuré par thermoanalyse dynamique-mécanique (DMTA) sur du film libre d'une épaisseur de 40 $\pm$ 10 $\mu$m.

**21.** Mélange de substances à durcissement double selon la revendication 20, **caractérisé en ce que** le matériau thermodurcissable a un module d'accumulation dans la plage du caoutchouc élastique d'au moins $10^{8,3}$ Pa.

**22.** Mélange de substances à durcissement double selon l'une des revendications 1 à 21, **caractérisé en ce que** le matériau durci et en particulier thermodurcissable préparé à partir de ce mélange présente un facteur de perte tan δ à 20°C d'au plus 0,10, le facteur de perte tan δ étant mesuré par thermoanalyse dynamique-mécanique (DMTA) sur du film libre d'une épaisseur de 40 $\pm$ 10 $\mu$m.

**23.** Mélange de substances à durcissement double selon la revendication 22, **caractérisé en ce que** le matériau durci et en particulier thermodurcissable présente un facteur de perte tan δ d'au plus 0,06 à 20°C.

**24.** Mélange de substances à durcissement double selon l'une des revendications 1 à 23, **caractérisé en ce qu'**il présente une teneur en liaisons activables par un rayonnement actinique de 0,5 à 6 méqu./g de corps solide.

**25.** Mélange de substances à durcissement double selon la revendication 24, **caractérisé en ce qu'**il présente une teneur en liaisons activables par un rayonnement actinique de 2 à 3 méqu./g de corps solide.

**26.** Mélange de substances à durcissement double selon les revendications 24 ou 25, **caractérisé en ce que** les liaisons qui peuvent être activées par un rayonnement actinique sont des doubles liaisons carbone-carbone.

**27.** Mélange de substances à durcissement double selon l'une des revendications 1 à 26, **caractérisé en ce qu'**il contient:

au moins un copolymère de (méth)acrylate qui contient des groupes hydroxyle,
un mélange d'au moins un acrylate d'isocyanate qui contient des segments de flexibilisation et au moins un acrylate d'isocyanate qui contient des segments durcissants,
au moins un diluant réactif et
au moins un photo-initiateur ainsi qu'éventuellement
au moins un polyisocyanate aliphatique et/ou un polyisocyanate cycloaliphatique.

**28.** Mélange de substances à durcissement double selon l'une des revendications 1 à 27, **caractérisé en ce qu'**il forme une substance de revêtement, un adhésif, une pâte d'étanchéité ou une matière première pour pièces moulées et films.

**29.** Mélange de substances à durcissement double selon la revendication 28, **caractérisé en ce que** la substance de revêtement est une peinture pour électro-immersion, une charge ou une couche de fond de protection contre l'impact des gravillons, une peinture dite "unideck" (déposée en une seule couche), une peinture de base ou un vernis transparent.

**30.** Mélange de substances à durcissement double selon les revendications 28 ou 29, **caractérisé en ce que** les matériaux durcis et en particulier thermodurcissables préparés à partir de ce mélange sont des revêtements, des couches d'adhésif, des joints d'étanchéité, des pièces moulées ou des films.

31. Mélange de substances à durcissement double selon la revendication 30, **caractérisé en ce que** les revêtements sont des peintures à électro-immersion, des peintures de charge, des peintures de fond pour protection contre l'impact des gravillons, des peintures dites "unideck", des peintures de base ou des vernis transparents.

32. Mélange de substances à durcissement double selon la revendication 31, **caractérisé en ce que** les revêtements sont des peintures multicouches colorées et/ou à effet.